# NEUE EUROPÄISCHE PATENTSCHRIFT

(11) **EP 0 174 481 B2**
(45) Veröffentlichungstag und Bekanntmachung des Hinweises auf die Entscheidung über den Einspruch: **13.03.1996**
(45) Hinweis auf die Patenterteilung: 12.10.1988
(21) Anmeldenummer: 85109571.1
(22) Anmeldetag: 30.07.1985
(51) Int. Cl.: B08B 15/00, F16L 41/00

(54) **Einrichtung zum Absaugen und Sammeln von Gasen, insbesondere von Kraftfahrzeug-Auspuffgasen in einer Montage- oder Betriebshalle**
Device for extracting and collecting gases, especially engine exhaust gases in a repair or factory shop
Dispositif pour aspirer et récolter des gaz, en particulier des gaz d'échappement dans un hall de montage ou de construction

(30) Priorität: 18.08.1984 DE 3430525; 13.09.1984 DE 3433602
(43) Veröffentlichungstag der Anmeldung: 19.03.1986
(73) Patentinhaber: Jentzsch, Horst, D-72631 Aichtal (DE); Schuppler, Berthold, D-73249 Wernau (DE)
(72) Erfinder: Jentzsch, Horst, D-72631 Aichtal (DE); Schuppler, Berthold, D-73249 Wernau (DE)
(74) Vertreter: Witte, Alexander, Dr.-Ing.

(56) Entgegenhaltungen:
- EP-A- 0 125 570
- DE-A- 1 404 195
- DE-A- 1 924 266
- DE-A- 2 458 318
- DE-A- 3 035 052
- DE-A- 3 041 350
- GB-A- 1 516 931
- NL-A- 73 946
- US-A- 1 892 791
- US-A- 1 920 768
- Niemann "Maschinenelemente", Springerverlag 1961, S. 261-262
- Prospekt:"Der Ludscheidt Gasförderkanal"
- Prospekt: "Direkt-Absaugung von Auspuffgasen mit dem Celsius-System", August 1984
- Zeichnung "VAU Ventilationssystem Laufwagen" 1980

## Beschreibung

Die Erfindung betrifft eine Einrichtung zum Absaugen und Sammeln von Gasen, insbesondere von Kraftfahrzeug-Auspuffgasen, in einer Montage- oder Betriebshalle, mit
- einem raumfesten Saugschlitzkanal, der an einer Seite mit einer elastischen, axial verlaufenden Lippendichtung versehen ist,
- mindestens einem axial entlang von Führungsprofilen bewegbaren wagen, der eine Saugdüse aufweist, die in der Lippendichtung dicht geführt ist, wobei der Wagen mit einem Antriebsmotor mit Abtriebswelle versehen ist, der ein den Wagen (16) bewegendes, an das Führungsprofil (41) anliegendes Reibrad (96) aufweist, und
- einem Sauggebläse, das an den Saugschlitzkanal angeschlossen ist und in der Saugdüse sowie einem daran angeschlossenen Schlauch einen Unterdruck erzeugt.

Anlagen der hier interessierenden Art werden zum Absaugen und Sammeln von Gasen und Abgasen verwendet, wenn das Gas oder Abgas an einem Ort aufgenommen werden soll, der sich innerhalb einer Montage- oder Betriebshalle oder dgl. räumlich verändert. Ein typisches ,Anwendungsbeispiel für derartige Einrichtungen sind Endmontagehallen von Kraftfahrzeugherstellern. Während der Endmontage und -prüfung werden nämlich die Motoren der Kraftfahrzeuge bereits in Betrieb gesetzt, so daß am Auspuff der Kraftfahrzeuge Auspuffgase anfallen. Gleichzeitig werden die Kraftfahrzeuge längs eines Förderbandes durch die Halle bewegt. Da es sehr aufwendig und darüberhinaus auch gefährlich wäre, die Auspuffgase in die Halle dringen zu lassen und großräumig aus der Halle abzusaugen, schießt man den Schlauch mit einer geeigneten Tülle und Klemme direkt an den Auspuff der Kraftfahrzeuge an und läßt die Wagen entlang des Saugschlitzkanales mit dem vom Band bewegten Kraftfahrzeug "mitwandern". Am Ende des Bandes wird der Schlauch wieder vom Auspuff gelöst und der Wagen gelangt über eine geeignete Rückführeinrichtung wieder zurück an den Anfang des Bandes. Während dieses Rücktransportes wird üblicherweise der Schlauch über einen Schlauchaufzug angehoben, so daß beim Rückfahren des Wagens keine Gefährdungen oder Sachbeschädigungen durch einen hin- und herschwingenden Schlauch eintreten können.

Weiterhin kann eine derartige Einrichtung zur Verwendung bei Kraftfahrzeugen auch in Betriebshallen eingesetzt werden, in denen eine Betriebsprüfung von Kraftfahrzeugen stattfindet, beispielsweise auf Omnibus-Betriebshöfen, bei technischen Überwachungsvereinen oder dgl.. Auch in diesem Falle wird das Kraftfahrzeug, beispielsweise zur Bremsprüfung von Achse zu Achse, in einem mehr oder weniger geschlossen Raum bewegt und durch die eingangs genannte Einrichtung können Abgase unmittelbar an der Stelle abgesaugt werden, wo sie anfallen.

Es versteht sich jedoch, daß das Einsatzgebiet dieser Einrichtungen keineswegs auf die Absaugung von Kraftfahrzeug-Auspuffgasen beschränkt ist. Es können vielmehr ebensogut sonstige Gase oder Abgase, auch Dämpfe und dgl., abgesaugt werden, ebenso die Gase mit festen Schwebeteilchen wie z. B. Luft mit Staub, Holzspänen oder ähnlichem.

Die aus dem eingangs genannten Dokument EP-A-0 125 570 bekannte Anlage weist Schlauchwagen auf, die entlang von Laufschienen verfahrbar sind. Hierzu sind die Schlauchwagen beidseitig an Laufschienen geführt und beidseitig mit je einer Laufrolle versehen, die für einen Antrieb an der Laufschiene sorgen. Die Laufrollen werden jeweils von Kettenantrieben betätigt, die ihrerseits gemeinsam von einer Ausgangswelle eines Untersetzungsgetriebes eines Elektromotors angetrieben werden. Der Elektromotor ist mittels Steuerkabeln steuerbar oder drahtlos fernsteuerbar.

Bei dieser Anlage konnen somit die Schlauchwagen im Selbstfahrbetrieb entlang der Laufschienen verfahren werden, wobei durch entsprechende Ansteuerung vorzugsweise als Gleichstrommotor ausgebildeten Elektromotoren auch eine Richtungsumkehr oder eine Geschwindigkeitsvariation denkbar erscheint. Allerdings bleibt in jedem Betriebszustand diese Anlage der Kraftfluß zwischen Elektromotor und Laufschienen erhalten. Selbst bei ausgeschaltetem Elektromotor setzen die Schlauchwagen einer Schleppbewegung einen erheblichen Reibungswiderstand entgegen, weil die Laufrollen weiterhin an den Laufschienen anliegen und über das Untersetzungsgetriebe und den Elektromotor mechanisch stark abgebremst werden.

Aus dem Dokument DE-C-2 855 325 ist eine Einrichtung mit einem Wagen bekannt, der im oberen Bereich mit Rollen versehen ist, die auf einem Führungsprofil laufen, das unmittelbar an den Saugschlitzkanal angeformt ist. Der Wagen wird vom bewegten Objekt, beispielsweise dem vom Band geforderten Kraftfahrzeug, mitgeschleppt.

Der Wagen ist nicht mit einem eigenen Antrieb versehen, so daß am Ende des Bandes ein Umsetzer erforderlich ist, der den Wagen auf eine Rücklaufbahn setzt, mit der er zum Bandanfang transportiert werden muß. Bei bekannten Einrichtungen wird hierzu ein Kettenförderer verwendet, in den der Wagen vom Umsetzer eingehängt und - bei Erreichen des Bandanfanges - von einem zweiten Umsetzer wieder ausgehängt und zum Beginn des Montagebandes verbracht wird.

Diese bekannte Einrichtung hat damit den Nachteil, daß die Bewegung des Wagens vollkommen von externen Transporteinrichtungen abhängig ist, nämlich dem vom Band bewegten Kraftfahrzeug, den Umsetzern und dem Kettenförderer der Rücklaufbahn. Dies kann zu mannigfaltigen Problemen führen.

Begegnet der Wagen auf seinem Weg entlang des Montagebandes beispielsweise einem mechanischen Hindernis, etwa einer Verschmutzung auf den Führungsprofilen des Saugschlitzkanals, muß dieser Widerstand vom ziehenden Kraftfahrzeug über den Schlauch überwunden werden. Dies kann u.U. zu einem Ablösen der Schlauchtülle vom Auspuff des Kraftfahrzeugs führen und damit zu einem unkontrollierten Austreten von Auspuffgasen. Im Bereich der Umsetzer sind relativ aufwendige Transporteinrichtungen erforderlich, beispielsweise ein Langhub-Pneumatikzylinder, dessen Bewegung exakt auf den Kettenförderer abgestimmt sein muß und somit eine weitere potentielle Störquelle darstellt.

Nachteilig ist weiterhin, daß bei unregelmäßig beschicktem Montageband sich im Bereich der Rücklaufbahn ein "Stau" von Wagen einstellen kann, wenn nämlich am Bandanfang weniger Wagen für ankommende Kraftfahrzeuge abgenommen werden, als gleichzeitig vom Kettenförderer über die Rücklaufbahn ankommen. Da in einen Kettenförderer eingehängte Gegenstände im allgemeinen mit diesem stark gekoppelt sind, führt ein solcher "Stau" zu Problemen, weil auch im Bereich des Umsetzers nur eine endliche Kapazität für eine Pufferung vorliegt. Andererseits ist es aber nicht möglich, bei unregelmäßig beschicktem Montageband Wagen leer mitlaufen zu lassen, weil kein Kraftfahrzeug in der Lücke vorhanden ist, das den Wagen mitziehen könnte.

Aus dem Dokument DE-A1-30 35 052 ist eine Vorrichtung mit einer Antriebseinrichtung für an Schienen verfahrbare Schlauchwagen zum Absaugen von Schadstoffen bekannt. Bei dieser bekannten Vorrichtung sind seitlich an einem stationären Saugkanal Lamellenplatten angeordnet. Ein Schlauchwagen ist seitlich am Saugkanal verfahrbar und hebt die jeweils in seinem Bereich befindlichen Lamellenplatten vom Saugkanal ab, so daß der Innenraum des Saugkanals über den Schlauchwagen mit einem an den Schlauchwagen angeschlossenen Absaugschlauch in Verbindung gebracht wird. Der Schlauchwagen läuft über Laufrollen an Führungsbahnen des Saugkanals. Der Schlauchwagen wird über einen Antriebsmotor, ein Getriebe sowie einen Reibradantrieb am Saugkanal bewegt.

Aus dem Dokument DE-B-19 24 266 ist eine Absauganlage für einen Saugschlitzkanal mit elastischen Dichtungslippen bekannt. Der Saugschlitzkanal ist im wesentlichen als zylindrisches Rohr ausgebildet. Auf der oberen Mantellinie des zylindrischen Rohres ist eine Führungsbahn angeordnet, die die Gestalt eines Rundstabes aufweist. Auf diesem Rundstab läuft eine Rolle, an der der Saugwagen aufgehängt ist. Ein motorischer Antrieb ist bei diesem bekannten Saugwagen nicht vorgesehen. Ein Anfang und ein Ende des Saugschlitzkanals sind über eine Führungsbahn zum Rückholen der Saugwagen miteinander verbunden.

Aus dem Dokument DE-C-24 58 318 ist ein Hängebahnfahrzeug bekannt. Das Fahrzeug ist mit einem elektromotorischen Antrieb versehen, der über ein Reibrad an einer Tragschiene angreift. Das Fahrzeug läuft im übrigen über Laufräder an der Tragschiene. Eines der Laufräder ist exzentrisch auf einer Achse gelagert, die mittels eines Vierkantzapfens und eines entsprechenden Schlüssels manuell verdrehbar ist. Bei Verdrehung der Achse wird das exzentrisch gelagerte Laufrad derart gegen die Tragschiene gedrückt, daß das Reibrad des Antriebes von der zugehörigen Lauffläche der Tragschiene abgehoben wird. Hierdurch wird erreicht, daß bei einem Defekt des Antriebes das Fahrzeug durch Angriff von außen durch eine Schleppkraft leicht verschoben werden kann.

Aus dem Dokument DE-A-14 04 195 ist eine fahrbare Reinigungsanlage für Textilmaschinen, insbesondere für Spinnmaschinen, bekannt. Bei dieser bekannten Anlage wird ein Wagen motorisch verfahren und saugt dabei Luft durch einen mitfahrenden Filter an. Zur Entleerung wird der Wagen an einer bestimmten Stelle außerhalb des Saugbetriebes gestoppt. Dort wird der Antrieb des Wagens durch eine Schiene mechanisch abgekoppelt.

Ähnliche Vorrichtungen sind aus den Dokumenten US-A-1 920 768, NL-A-73 946 sowie US-A-1 892 751 bekannt.

In dem DE-Buch "Maschinenelemente" (G. Niemann), Springer-Verlag, 1961, Seite 261 - 262 finden sich Berechnungsvorschriften für Hubmagnete.

Der DE-Prospekt "Der Ludscheidt Gasförderkanal" zeigt und beschreibt eine Abgas-Absauganlage gemäß dem bereits gewürdigten Dokument DE-A-30 35 052.

Bei einer aus dem DE-Prospekt "Direkt-Absaugung von Auspuffgasen mit dem CELSIUS-SYSTEM" bekannten Einrichtung ist ein in der Draufsicht parallelogrammförmiges System von Saugschlitzkanälen mit Lippendichtungen vorgesehen. Dabei sind die beiden längeren Seiten des Parallelogramms nicht nur über die beiden kürzeren Seiten miteinander verbunden, sondern zusätzlich im Inneren des Parallelogramms über zwei zusätzliche, zu den kürzeren Seiten parallele Kanalstücke. An den jeweiligen Verbindungsstellen sind Weichen vorgesehen. Die Kraftfahrzeuge fahren in das Kanalsystem an der einen spitzen Ecke des Parallelogramms ein und werden dann nach Durchlaufen der entsprechenden Weichen unterhalb eines der parallelen, kürzeren Saugschlitzkanalstücke abgestellt. Die Kraftfahrzeuge schleppen dabei die Saugwagen mit. Nach Beendigung der Arbeiten fahren die Kraftfahrzeuge geradeaus weiter und gelangen über entsprechende Weichen zur zweiten, spitzen Ecke des parallelogrammförmigen Kanalsystems. Auf diesem Wege werden die Saugwagen weiterhin vom Kraftfahrzeug mitgeschleppt. Die Saugwagen werden nun am Schlauchende von den Kraftfahrzeugen abgekoppelt und fahren über eine Rückführbahn wieder an das andere, spitze Ende des Parallelogramms zurück. Dies geschieht entweder selbsttätig mittels eines entsprechend eingestellten Gefälles oder mittels eines motorischen Antriebes an den Saugwagen.

Die technischen Einzelheiten des motorischen Antriebes bei diesen Saugwagen sind einer technischen Zeichnung "VAU Ventilationssystem Laufwagen" vom 1.01.1980 zu entnehmen. Danach sind die Laufwagen in der Weise ausgebildet, wie dies bereits zu dem Dokument DE-B-19 24 266 erläutert wurde. Zusätzlich zu den beschriebenen Merkmalen ist jedoch ein motorischer Antrieb mit einem Elektromotor vorgesehen. Die Abtriebswelle des Elektromotors treibt einen Zahnriemen an, der die bereits erwähnte Rolle antreibt, die auf der als Rundmaterial ausgebildeten Führungsbahn läuft.

Aus dem Dokument DE-A-3 041 350 ist eine Absaugvorrichtung mit einem stationär verlegten Absaugkanal bekannt, bei der entlang des stationär verlegten Absaugkanals ein zweiter, zu diesem rechtwinklig verlaufende Absaugkanal mittels eines Hydraulikzylinders verschiebbar ist. Entlang des zweiten Absaugkanals ist wiederum mittels eines weiteren Hydraulikzylinders ein Schlauchwagen verfahrbar, so daß der Schlauchwagen in zwei senkrecht zueinander stehenden Koordinatenrichtungen verfahrbar ist. Der bewegliche Saugkanal ist wegen seines erheblichen Gewichts am einen Ende in einem Deckenprofil axial verschieblich gelagert, während sein anderes, freies Ende in dem stationär verlegten Absaugkanal geführt ist. Aufgrund der erheblichen Massen des Absaugsystems ist ein Mitschleppen, insbesondere über einen relativ leichten und mechanisch nur begrenzt belastbaren Schlauch nicht möglich.

Schließlich ist in dem Dokument GB-A-1 516 931 noch eine Abgas-Absauganlage beschrieben, bei der der Wagen an einer mechanischen Führung innerhalb des Saugschlitzkanals geführt ist. Ein eigener Antrieb der Wagen ist jedoch bei dieser bekannten Einrichtung nicht vorgesehen.

Der Erfindung liegt demgegenüber die Aufgabe zugrunde, eine Einrichtung zum Absaugen und Sammeln von Gasen, insbesondere von Kraftfahrzeug-Auspuffgasen in einer Montage- oder Betriebshalle, zu schaffen, die sowohl einen Selbstfahrbetrieb wie auch einen reibungsarmen Schleppbetrieb ermöglicht.

Diese Aufgabe wird erfindungsgemäß dadurch gelöst, daß der Wagen (16) mittels Rollen (48-51) an den Führungsprofilen (40, 41) geführt und gehalten ist, daß die Abtriebswelle direkt das Reibrad trägt, und daß ein elektrisch schaltbares Kupplungselement zum Trennen bzw. Schließen des Kraftflusses zwischen Antriebsmotor und Führungsprofil vorgesehen ist.

Die Erfindung löst damit die zugrundeliegende Aufgabe vollkommen, weil in allen Bereichen der Einrichtung, d. h. sowohl im Bereich des Saugschlitzkanals wie auch der Umsetzer und der Rücklaufbahn eine autonome Bewegung des Wagens durch eigenen Antrieb möglich ist bzw. sein kann. Dabei wird durch die Trennung des Kraftflusses zwischen Motor und Führungsprofil an jeder Stelle der Einrichtung ein Stillstehen des Wagens ermöglicht. Gleichzeitig kann der Wagen jedoch leicht wie bei den bekannten Einrichtungen durch Zug am Schlauch verfahren werden kann, weil infolge der Trennung des Kraftflusses der Antriebsmotor nicht als Bremse wirkt.

Man kann demzufolge im Bereich des Saugschlitzkanales den Wagen durch Eigenantrieb parallel zum Band mitlaufen lassen, so daß auf den Schlauch kein Zug ausgeübt wird und ein versehentliches Lösen des Schlauches vom Auspuff des Kraftfahrzeuges nicht befürchtet werden muß. Je nach vorliegenden Randbedingungen kann man die Umsetzer entweder in der herkömmlichen Weise mit einer gesonderten Fördereinrichtung, beispielsweise dem bereits genannten Langhub-Pneumatikzylinder, versehen. Man kann den Umsetzer aber auch so ausbilden, daß er beispielsweise in Gestalt eines halbkreisförmigen Bogens vom Wagen mit eigenem Antrieb durchfahren werden kann, wobei sich an den Bogen unmittelbar die Rücklaufbahn anschließen kann, die vom Wagen ebenfalls mit eigenem Antrieb durchfahren wird. Durch das elektrisch schaltbare Kupplungselement stellen sich auch keine Probleme bei unregelmäßig beschicktem Montageband ein, weil im Bereich der Rücklaufbahn oder des Umsetzers am Ende der Rücklaufbahn beliebig viele Wagen "geparkt" werden können, die dann je nach Bedarf am Montageband durch Schließen des Kraftflusses und Einschalten des Antriebsmotors dem Band zugeführt werden können.

Es liegt auf der Hand, daß die erfindungsgemäße Einrichtung sich insbesondere auch dazu eignet, im Rahmen eines rechnergesteuerten Systems eingesetzt zu werden, beispielsweise bei vollautomatisierten Montage- oder Betriebseinrichtungen, weil - abgesehen vom Anlegen des Schlauches, das im Rahmen der vorliegenden Erfindung nicht weitergebildet wird alle weiteren Vorgänge zentral steuerbar sind.

In bevorzugter Ausgestaltung der Erfindung ist das Rad ein Reibrad.

Zwar kann man auch andere mögliche Antriebsmechanismen im Rahmen der vorliegenden Erfindung mit Vorteil verwenden, beispielsweise Zahnräder oder Drahtseilförderer, ein Reibrad hat jedoch den weiteren Vorteil, daß es in besonders einfacher Weise durch räumliche Bewegung als Kupplungselement dienen und an praktisch jeder Stelle zu- und abgeschaltet werden kann. Außerdem ist ein Reibrad eine besonders einfache und damit kostengünstige Transporteinrichtung.

Bei einer weiteren Ausgestaltung der Erfindung weist der Wagen einen Rahmen aus Bügeln mit Abschnitten auf, die in einer zur Längsachse des Saugschlitzkanales parallelen Ebene liegen, wobei die Abschnitte zweier Bügel mit einer lösbaren ersten Montageplatte versehen sind und der Antriebsmotor an der ersten Montageplatte angeordnet ist.

Diese Maßnahme hat den wesentlichen Vorteil, daS bereits in Betrieb befindliche Einrichtungen umgerüstet werden können, weil lediglich auf die an sich bekannten Abschnitte der Bügel die erste Montageplatte mit dem Antriebsmotor sowie den erforderlichen Steuermitteln montiert werden muß. Auch Wartungsarbeiten an der erfindungsgemäßen Einrichtung sind leichter durchzuführen, weil im Bedarfsfall lediglich die Montageplatte mit allen Antriebs- und Steuereinheiten ausgetauscht werden muß. Dies ist bei der erfindungsgemäßen Einrichtung deswegen besonders wichtig, weil in industriellen Montage- oder Betriebshallen keine längere Unterbrechung wegen Ausfalls von betrieblichen Hilfsmitteln geduldet werden kann. Es ist daher besonders wichtig, daß auch solche Kräfte, die nicht mit allen Einzelheiten dieser Hilfsmittel vertraut sind, eine schnelle Reparatur vornehmen können und es ist dann besonders günstig, wenn nicht der gesamte Wagen ausgetauscht, sondern vielmehr nur die Montageplatte mit den genannten Komponenten ersetzt werden muß.

Bei einer weiteren Ausgestaltung der Erfindung ist die Lage des Antriebsmotors relativ zum Führungsprofil mittels eines Elektromagneten veränderbar.

Auch diese Maßnahme hat den Vorteil, daß sich ein besonders einfacher Aufbau der Einrichtung ergibt, weil insgesamt der Antriebsmotor mit dem daran angeordneten Rad oder Reibrad verschwenkt wird; weitere Trennkupplungen o.dgl., die zwischen Motor und Rad anzuordnen wären, entfallen damit. Der Elektromagnet ist darüber hinaus ein einfach elektrisch zu schaltendes Element mit hoher Betriebssicherheit, so daß der Kraftfluß einfach und sicher durch Steuersignale geschaltet werden kann.

Bei einer weiteren bevorzugten Ausgestaltung der Erfindung ist der Antriebsmotor an einem mittels eines Gelenkes schwenkbaren Hebel angeordnet, an dessen einem Arm der Elektromagnet angreift.

Diese Maßnahme hat den Vorteil, daß die Bewegung des Antriebsmotors zum Schließen oder Öffnen des Kraftflusses durch eine einfache Schwenkbewegung dargestellt wird, die mit relativ kurzem Hub und ohne die Gefahr eines Verkantens ausgeführt werden kann.

Besonders bevorzugt ist dabei, daß die erste Montageplatte parallel zur Längsachse des Saugschlitzkanales verläuft und einen von dem in unmittelbarer Nähe des Saugschlitzkanales angeordneten Führungsprofil weg weisenden Flansch aufweist, dessen freies Ende mit einem Scharnier versehen ist, das weiterhin eine zum Saugschlitzkanal weisende Hebelplatte trägt, an deren freiem Ende eine Betätigungsstange des ebenfalls an der Montageplatte befestigten Elektromagneten angreift und wobei ferner der Antriebsmotor von einem weiteren, an der Hebelplatte angeordneten Montageflansch gehalten wird.

Diese Ausführungsform hat den Vorteil, daß mit einer Mindestzahl von Bauelementen die erforderlichen Wege für den Antriebsmotor dargestellt werden können. Durch geeignete Wahl der Längen der Hebelarme kann darüber hinaus der Elektromagnet hinsichtlich seiner Dimensionierung und Ansteuerung an die erforderlichen Wege und vor allem an die Gewichte der Transporteinrichtungen angepaßt werden.

Eine besonders gute Wirkung wird bei diesem Ausführungsbeispiel dann erzielt, wenn die Hebelplatte beim Schließen des Kraftflusses angehoben wird.

Diese Maßnahme hat nämlich den Vorteil, daß im Ruhezustand die Hebelplatte abgesenkt und der Kraftfluß damit geöffnet ist, weil Antriebsmotor und Reibrad durch Schwerkraft vom Führungsprofil wegbewegt sind. Im stromlosen Zustand des Elektromagneten kann damit der Wagen mit minimaler Reibung von Hand oder von einer Transporteinrichtung eines Umsetzers oder durch Ziehen am Schlauch bewegt werden, wie dies bei bekannten Einrichtungen der Fall ist. Nur während der im Verhältnis sehr viel kürzeren Fahrtzeiten des Wagens mit eigenem Antrieb ist ein Anheben der Hebelplatte und damit ein Erregen des Elektromagneten nötig. Hierdurch wird nicht nur der Verschleiß vermindert, sondern auch die Betriebssicherheit wesentlich erhöht.

Bei einem Ausführungsbeispiel der Erfindung ist zur Steuerung das Antriebsmotors und des elektrisch schaltbaren Kupplungselementes ein elektrisches Schaltgerät vorgesehen.

Mit einem solchen Schaltgerät können zentral sämtliche Transportfunktionen des Wagens gesteuert werden, d. h. nicht nur der Antriebsmotor selbst, sondern auch das Kupplungselement. Man kann das elektrische Schaltgerät mit einer Vielzahl von Eingängen versehen, um die Antriebssteuerung des Wagens je nach vorliegenden Bedingungen im Einsatz der Einrichtung auszulegen.

Das elektrische Schaltgerät kann beispielsweise zum Verzögern des Wagens zunächst den Antriebsmotor stromlos machen, wodurch dieser als Bremse wirkt. Wenn der Wagen dann steht, kann weiterhin der Elektromagnet stromlos gemacht werden, so daß der Kraftfluß insgesamt aufgetrennt und der Wagen in der beschriebenen Weise nur noch gegen den Rollwiderstand seiner Rollen bewegt werden kann.

Bei einer Ausbildung dieses Ausführungsbeispieles ist das Schaltgerät mit einem Näherungsschalter gekoppelt, der in Fahrtrichtung des Wagens wirkt und bei Annäherung an ein Hindernis mindestens das Kupplungselement betätigt.

Diese Maßnahme hat den Vorteil, daß die Probleme bei dem eingangs geschilderten "Stau" von Wagen im Bereich der Rücklaufbahn vermieden werden, weil sich die Wagen von selbst hintereinander aufreihen und dabei einen durch den Näherungsschalter vorgegebenen Mindestabstand wahren. Wenn dann ein Umsetzer den vordersten Wagen wegnimmt, rücken die dahinter parkenden Wagen von selbst nach, bis wieder die vorgegebenen Mindestabstände zwischen ihnen erreicht sind. Irgendwelche Schäden durch Auffahren von Wagen aufeinander werden damit sicher vermieden.

Dieses Ausführungsbeispiel kann noch dadurch weitergebildet werden, daß der Näherungsschalter berührungslos arbeitet und mit einer Reflexionsplatte eines in Fahrtrichtung des Wagens vorausbefindlichen weiteren Wagens zusammenarbeitet.

Gegenüber mechanischen Näherungsschaltern hat diese Anordnung den Vorteil, daß eine gegenseitige Berührung und damit möglicherweise Beschädigung des Wagens überhaupt nicht mehr eintritt. Beispielsweise kann die Ansprechentfernung der Näherungsschalter so dimensioniert werden, daß ein sicheres Abbremsen des auffahrenden Wagens möglich ist, ohne daß die Wagen einander berühren.

Bei einer weiteren Ausbildung des Ausführungsbeispieles mit einem Schaltgerät ist dieses mit einem Dehnungssensor gekoppelt, der am Schlauch befestigt ist, derart, daß bei Überschreiten einer vorgegebenen Dehnung des Schlauches der Kraftfluß geschlossen wird. Gemäß einer weiteren Variante der Erfindung kann statt eines Dehnungssensors oder zusätzlich zu diesem auch ein Pendelschalter am Wagen verwendet werden, dessen Schaltarm mit der Bewegung des Schlauches ausgelenkt wird.

Diese Ausführungsbeispiele eignen sich insbesondere zur Steuerung im Bereich des Montagebandes. Anstatt von dem auf dem Montageband bewegten Kraftfahrzeug mitgezogen zu werden, bewegt sich der Wagen dann mit eigenem Antrieb, und zwar jeweils so lange, wie auf den Schlauch ein Zug in seitliche Richtung ausgeübt wird. Der Betrag dieses Zuges kann relativ niedrig eingestellt werden, so daß eine mechanische Belastung des Schlauches reduziert und vor allem ein unbeabsichtigtes Lösen der Tülle am Auspuff des Kraftfahrzeuges vermieden wird. Der Wagen kann dann mit eigenem Antrieb auch verschmutzte Stellen der Führungsprofile überfahren, ohne daß dabei ein höherer Zug im Schlauch aufträte.

Schließlich kann bei einem weiteren Ausführungsbeispiel der Erfindung mit einem Schaltgerät dieses mit einem Strahlungssender bzw. -empfänger und das freie Ende des Schlauches mit einem entsprechenden Strahlungsempfänger bzw. -sender versehen sein, derart, daß bei Überschreiten eines vorgegebenen Abstandes des freien Endes des Schlauches vom Schaltgerät der Kraftfluß geschlossen wird.

Auch dieses Ausführungsbeispiel eignet sich zum Einsatz im Bereich des Montagebandes, wobei wiederum der Wagen mit eigenem Antrieb neben dem Kraftfahrzeug herfährt, diesmal jedoch eine vollkommen berührungslose Steuerung über eine Licht-, Infrarot-, Ultraschallstrecke o.dgl. erfolgt. Das Schaltgerät und das entsprechende Element am freien Ende des Schlauches können dabei selbstverständlich so kodiert sein, daß eine Wechselwirkung mit anderen Schaltgeräten ausgeschlossen ist.

Bei einer weiteren Ausgestaltung der Erfindung ist an einer zweiten lösbaren Montageplatte des Wagens ein Schlauchaufzug befestigt.

Bei dieser Maßnahme stellen sich die bereits weiter oben geschilderten Vorteile der leichten Nachrüstbarkeit und Wartung ein auch bezüglich des Schlauchaufzuges, der an sich bei derartigen Einrichtungen bekannt ist.

Bei einem weiteren Ausführungsbeispiel der Erfindung ist der Wagen mit Stromabnehmern versehen, die mit Stromschienen zusammenwirken.

Diese Maßnahme hat gegenüber mitgeschleppten Kabeln o.dgl. den Vorteil, daß die Wagen leicht abgenommen und eingesetzt werden können, außerdem können über die räumliche Anordnung der Stromschienen, beispielsweise über Trennstellen, weitere Steuerfunktionen ausgeübt werden, wie dies ebenfalls an sich bekannt ist.

Besonders bevorzugt ist dabei, für den Antriebsmotor, das Kupplungselement und ggf. den Schlauchaufzug jeweils getrennte Stromabnehmer und jeweils getrennte Stromschienen vorzusehen.

Diese Maßnahme hat den Vorteil, daß zum einen die unterschiedlichen Aggregate mit unterschiedlicher Nennspannung betrieben werden können, je nachdem welche Spannung für das Aggregat am besten geeignet ist. Außerdem können auf diese Weise über eine geeignete Geometrie der Stromabnehmer oder Stromschienen unterschiediche Steuerungsfunktionen für die einzelnen Aggregate realisiert werden.

Bei einer Variante dieses Ausführungsbeispiels enthält der Schlauchaufzug einen Gleichstrommotor als Antrieb und die paarweise ausgebildeten Stromschienen umfassen erste Abschnitte, auf denen sie zum Aufwickeln des Schlauches eine erste Polarität der Betriebsspannung aufweisen, während zweite Abschnitte zum Abwickeln mit einer zweiten Polarität beschaltet sind.

Diese Maßnahme hat den Vorteil, daß der Vorgang des Auf- und Abwickelns des Abgasschlauches zunächst ohne weitere Schaltungsmaßnahmen von selbst an den Positionen der Einrichtung erfolgt, an denen der Schlauchaufzug in der genannten Weise betätigt werden soll.

Eine besonders bevorzugte praktische Ausführungsform einer solchen Anlage zeichnet sich dadurch aus, daß eine erste Anschlußklemme des Motors fest mit den Stromabnehmern der einen Schiene des Paares Stromschienen verbunden ist und daß eine zweite Anschlußklemme mit zwei Schaltstrecken in Verbindung steht, die über ein wechselseitig betätigbares Endschalterpaar des Motors steuerbar sind, wobei die Schaltstrecken mit den Stromabnehmern der anderen Schiene über einen Umschalter verbindbar sind, der in Abhängigkeit von der an einer der Schienen vorliegenden Polarität betätigt wird.

Diese Maßnahme hat den Vorteil, daß der Auf- bzw. Abwickelvorgang für den Abgasschlauch vollautomatisch bis zum Erreichen einer voreinstellbaren Endstellung abläuft, wobei der Umschalter dafür sorgt, daß für den jeweils nachfolgenden, entgegengesetzten Wickelvorgang die Polarität der Betriebsspannung an den Anschlußklemmen des Motors vertauscht wird.

Besonders bevorzugt ist dabei, wenn der Umschalter über eine Diode betätigt wird, die mit einer der Schienen verbunden ist.

Der Vorteil dieser Maßnahme ist, daß ohne mechanisch zu betätigende Elemente die Polarität einer der Schienen erkannt werden kann, so daß bei einer vorwählbaren Polarität die Diode leitet und den Umschalter betätigt.

Weiterhin wird eine gute Wirkung dann erzielt, wenn der Antriebsmotor und/oder der Motor des Schlauchaufzuges Scheibenwischermotoren sind und die Stromschienen mit Niederspannung beaufschlagt werden.

Diese Maßnahme hat den Vorteil, daß Scheibenwischermotoren besonders robuste Servomotoren sind, die überdies bereits ein Untersetzungsgetriebe aufweisen, dessen Abtriebsdrehzahl im hier erforderlichen Bereich liegt. Auch das erforderliche Drehmoment zum Antrieb des Wagens bzw. Aufziehen des Schlauches steht bei Scheibenwischermotoren zur Verfügung. Schließlich werden derartige Scheibenwischermotoren mit einer Niederspannung, üblicherweise 12 Volt oder 24 Volt betrieben. Diese Niederspannung kann gefahrlos und ohne die Notwendigkeit aufwendiger Isolierungen oder Mindestabstände über die Stromschienen verteilt werden.

Bei einer weiteren Ausführungsform der Erfindung mit Stromabnehmern ist der Wagen in Fahrtrichtung mit zwei hintereinander angeordneten Stromabnehmern versehen.

Diese Maßnahme hat den Vorteil, daß Trennstellen und Übergangsstellen, beispielsweise zwischen dem Saugschlitzkanal bzw. der Rücklaufbahn und Umsetzern, störungsfrei überfahren werden können.

Bevorzugt ist dabei, die Stromabnehmer an ihren einen Enden über eine Feder miteinander zu verbinden und an ihren entgegengesetzten Enden seitlich zur Fahrtrichtung schwenkbar anzuordnen.

Diese Maßnahme hat den Vorteil, daß eine federnde Ausweichbewegung senkrecht zur Fahrtrichtung möglich ist, so daß die Stromabnehmer sicher in eine Aufnahmegabel einer Stromschiene einfahren können, auch wenn der Wagen infolge der Fahrtbewegung etwas schwankt oder sich im Laufe des Betriebes gewisse Abnutzungen oder Verschiebungen eingestellt haben sollten.

Die Stromabnehmer können erfindungsgemäß auch in der Höhe schwenkbar angeordnet sein, entweder um sie zu Wartungszwecken auszulenken oder außer Eingriff mit den Stromschienen zu bringen.

Bei einer weiteren Ausführungsform der Erfindung ist die erste Montageplatte mit dem Antriebsmotor, dem Kupplungselement sowie den zugehörigen Stromabnehmern und Stromschienen auf der einen Seite und die zweite Montageplatte ist mit dem Schlauchaufzug sowie den zugehörigen Stromabnehmern und Stromschienen auf der anderen Seite des Wagens angeordnet.

Diese Maßnahme hat den Vorteil, daß der Gesamtaufbau des Wagens besonders kompakt wird, weil die erforderlichen Antriebs- und Steuerelemente auf beide Seiten des Wagens verteilt sind, wodurch sich eine nach beiden Seiten nur minimal ausladende Baugröße ergibt. Außerdem können die beiden Montageplatten im Interesse einer leichten Auswechselbarkeit unabhängig voneinander ab- und angebaut werden, ohne die jeweils andere Aggregategruppe mit lösen zu müssen. Die Verteilung der Stromschienen auf beide Seiten des Wagens hat schließlich noch den Vorteil, daß eine zu große Häufung von Stromschienen auf einer Seite vermieden wird und Fehleinfädelungen von Stromabnehmern in Stromschienen nicht auftreten können.

Eine besonders gute Wirkung wird in diesem Falle dadurch erzielt, daß die Montageplatten seitlich von außen an den Wagen geschraubt sind.

Diese Maßnahme hat den Vorteil, daß die gesamte Antriebseinheit bzw. der gesamte Schlauchaufzug von außen vom Wagen abgeschraubt werden kann, beispielsweise für Reparaturzwecke.

Schließlich ist noch ein Ausführungsbeispiel bevorzugt, bei dem der Saugschlitzkanal neben einer Rücklaufbahn verläuft, deren Enden jeweils über Umsetzer oder Führungsprofil-Bögen miteinander verbunden sind, wobei mindestens die Rücklaufbahn mit Stromschienen für den Antriebsmotor und das Kupplungselement versehen und wobei ferner mindestens die Umsetzer bzw. Bögen mit Stromschienen für den Schlauchaufzug, sowie ggf. den Antriebsmotor und das Kupplungselement versehen sind.

Diese Maßnahme hat den Vorteil, daß bei sparsamer Auslegung mit Stromschienen lediglich diejenigen Bereiche der Einrichtung für einen Selbstfahrbetrieb der Wagen ausgelegt sind, in denen ein solcher Betrieb bei einfacher Ausstattung der Einrichtung erforderlich ist.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
Fig. 1 eine perspektivische Gesamtansicht einer erfindungsgemäßen Einrichtung in einer Montagehalle;
Fig. 2 eine perspektivische Ansicht eines Wagens in einer Einrichtung gemäß Fig. 1;
Fig. 3 und 4 eine Vorder- und eine Seitenansicht des in Fig. 2 dargestellten Wagens mit weiteren Einzelheiten gemäß der Erfindung;
Fig. 5 einen Ausschnitt aus Fig. 3 in größerem Maßstab und mit weiteren erfinderischen Einzelheiten;
Fig. 6 die Elemente von Fig. 5, jedoch in Seitenansicht;
Fig. 7 eine Darstellung wie Fig. 6, jedoch von der anderen Wagenseite;
Fig. 8 eine schematische Darstellung einer Stromschienenverteilung bei einer Einrichtung gemäß Fig. 1;
Fig. 9 eine schematische Darstellung für zwei Ausführungsbeispiele von Steuerungen eines Wagens bei der Einrichtung gemäß Fig. 1;
Fig. 10 eine Variante eines Steuerungsbeispieles von Fig. 9;
Fig. 11 einen Stromlaufplan zur Erläuterung eines Ausführungsbeispiels einer Steuerung des Schlauchaufzuges;
Fig. 12 eine schematische Ansicht eines Ausführungsbeispiels eines Wagens, von oben, zur Erläuterung der Funktion leicht demontierbarer Montageplatten.

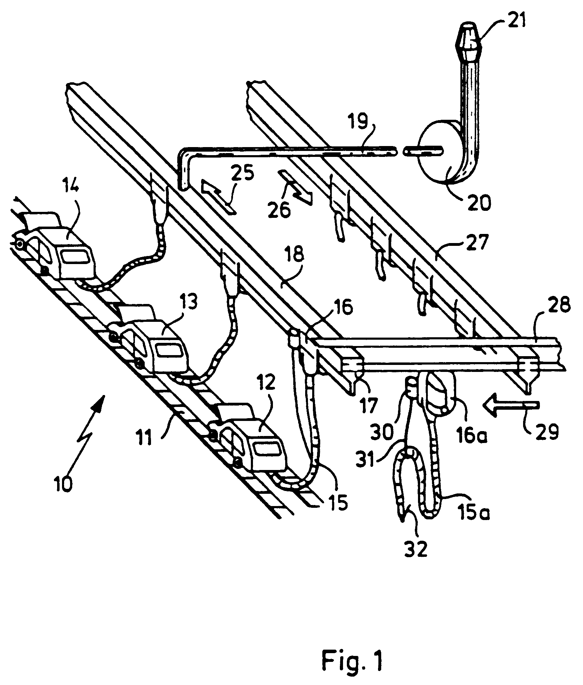

In Fig. 1 ist mit 10 als Ganzes eine Endmontage perspektivisch dargestellt, wie sie in einem Herstellerbetrieb für Kraftfahrzeuge besteht. In einer Werkshalle befindet sich ein Band 11, auf dem Kraftfahrzeuge 12, 13, 14 langsam vorwärts bewegt werden, während Monteure Einstell- und Prüfarbeiten am Kraftfahrzeug vornehmen. Während dieser Arbeiten müssen die Motoren der Kraftfahrzeuge 12, 13, 14 laufen. Aus diesem Grunde sind an die Auspuffanlagen der Kraftfahrzeuge 12, 13, 14 Abgasschläuche 15 angeschlossen, deren anderes Ende in jeweils einem Wagen 16 mündet. Die Wagen 16 laufen an einem einen Rohlraum 17 umschließenden Saugschlitzkanal 18, der über eine zentrale Absaugung 19 mit einem Sauggebläse 20 in Verbindung steht, das auf einen Schornstein 21 arbeitet.

Das Band 11 mit den Kraftfahrzeugen 12, 13, 14 bewegt sich in eine Richtung, die mit einem Pfeil 25 angedeutet ist. Die Wagen 16 werden am Ende des Bandes 11 über eine in Fig. 1 nicht dargestellte Einrichtung auf eine Rücklaufbahn 27 umgesetzt, die sie entlang der Richtung eines Pfeiles 26 durchfahren. Am Ende der Rücklaufbahn 27 ist ein Umsetzer 28 angeordnet, der beispielsweise über einen pneumatischen Langhub-Zylinder verfügen kann. In Richtung des Pfeiles 29 werden die Wagen, in Fig. 1 dargestellt am Beispiel eines Wagens 16a, wieder zurück zum Beginn des Saugschlitzkanales 18 verfahren, der mit dem Beginn des Bandes 11 zusammenfallen kann.

Man erkennt am Wagen 16a einen Schlauch 15a sowie einen Schlauchaufzug 30 mit einem Seil 31, mit dem der Schlauch 15a in eine hochgezogene Position gebracht werden kann, in der der Wagen ohne die Gefahr, daß ein hin- und herschwingender Schlauch Beschädigungen ausführt, verfahren werden kann. Am Ende des Schlauches 15a ist eine Auspufftülle 32 mit Klemmzange zu erkennen.

Während der Wagen 16a auf dem Umsetzer 28 in Richtung zum Beginn des Saugschlitzkanales 18 verfahren wird, wird der Schlauchaufzug 30 betätigt und der Schlauch 15a abgesenkt. Ein Arbeiter befestigt nun das freie Ende des Schlauches 15a mittels der Auspufftülle 32 mit Klemmzange am Auspuff eines Kraftfahrzeuges. Das Kraftfahrzeug wird nun vom Band 11 in Richtung des Pfeiles 25 bewegt und der Wagen 16a kann durch Zug über den Schlauch 15a mitgezogen werden. Am Ende des Saugschlitzkanales 18 befindet sich eine in Fig. 1 nicht dargestellte Steuerschiene, mit der ein Hebel am Wagen 16a verschwenkt wird. Dieser Hebel löst zum einen über einer Bowdenzug die Klemmzange an der Auspufftülle 32 und betätigt über einen Schalter zum anderen den Schlauchaufzug 30, so daß für das Umsetzen, Rücklaufen und erneute Umsetzen der Schlauch 15a sich in der eingezeichneten eingezogenen Position befindet.

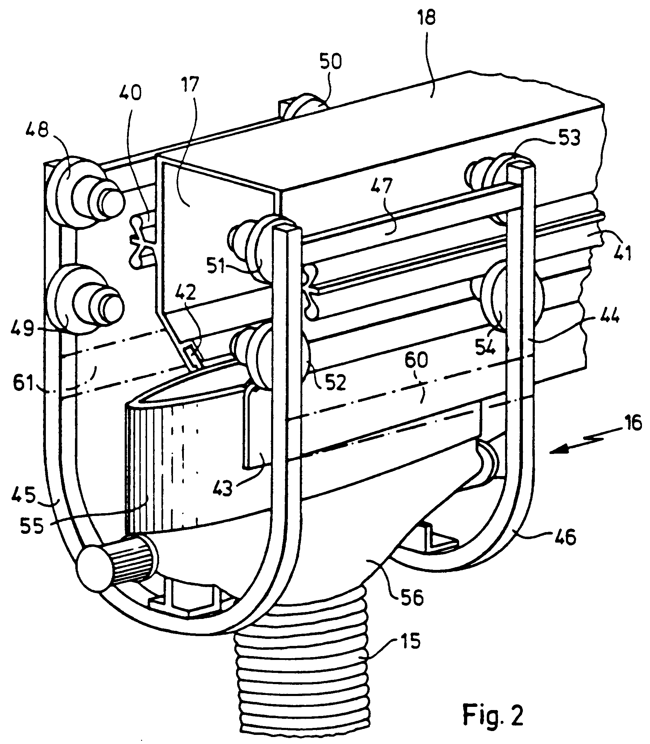

Fig. 2 zeigt in perspektivischer Darstellung die Einzelheiten eines Wagens 16 an einem Saugschlitzkanal 18.

Man erkennt, daß an den den Hohlraum 17 umschließenden Saugschlitzkanal 18 seitlich jeweils ein Führungsprofil 40, 41 angeformt ist. Ein oberer, im wesentlichen kastenförmiger Abschnitt des Saugschlitzkanales 18 ist nach unten hin offen und geht dort in zwei elastische Lippendichtungen 42, 43 über, die sich entlang der Längsachse des Saugschlitzkanales 18 erstrecken.

Der Wagen 16 weist an der vorderen und der hinteren Stirnfläche jeweils einen U-förmigen Bügel 45, 46 auf, der nach oben offen ist und seitlich senkrechte Abschnitte 44 aufweist. Dle Abschnitte 44 sind im Bereich der freien Enden der Bügel 45, 46 über Streben 47 miteinander verbunden. Weiterhin sind die senkrechten Abschnitte 44 auf der nach innen weisenden Seite der Bügel 45, 46 mit Rollen 48, 49, 50, 51, 52, 53, 54 versehen, und zwar weist jeder Bügel 45, 46 an seinem freien Ende jeweils ein Paar derartiger Rollen 48, 49; 50; 51, 52; 53, 54 auf, wobei diese Paare jeweils die Führungsprofile 40, 41 einschließen.

Im Bogenbereich der Bügel 45, 46 ist eine in Längsrichtung des Saugschlitzkanales 18 linsenförmige Saugdüse 55 angeordnet, die vorzugsweise aus Edelstahl besteht. Diese Saugdüse 55 schmiegt sich in die elastischen Lippendichtungen 42, 43, so daß der Saugschlitzkanal 18 über seine ganze Länge nach unten hin dicht ist und demzufolge nur minimale Leckverluste entstehen. Die Saugdüse 55 geht im unteren Bereich in ein Spritzteil 56 über, das vorzugsweise aus Leichtmetallguß besteht. An das Spritzteil 56 wiederum ist der Schlauch 15 angeschlossen.

Wie man leicht erkennen kann, kann sich der Wagen 16, geführt über die Rollen 48 bis 54 entlang der Führungsprofile 40, 41, bewegen, wobei der Schlauch 15 über die Saugdüse 55 stets dicht an den Saugschlitzkanal 18 angeschlossen ist.

Die Einrichtung gemäß Fig. 1 und der Wagen gemäß Fig. 2 sind im bislang beschriebenen Umfang an sich bekannt, insbesondere sind die Wagen 16, 16a bei den bekannten Einrichtungen nur durch externe Transporteinrichtungen bewegbar, d. h. im Bereich des Bandes 11 durch Mitziehen über die Kraftfahrzeuge 12 bis 14, im Bereich der Umsetzer 28 über sonstige Hilfseinrichtungen und im Bereich der Rücklaufbahn 27 über eine Fördereinrichtung, beispielsweise einen Kettenförderer.

Erfindungsgemäß sind nun bei dem in Fig. 2 dargestellten Wagen 16 im Bereich der Abschnitte 44 auf der einen Seite des Wagens 16 ein erstes Montageblech 60 und auf der gegenüberliegenden Seite ein zweites Montageblech 61 angeordnet, mit dem Transport und sonstige Einrichtungen am Wagen 16 leicht lösbar befestigt werden können.

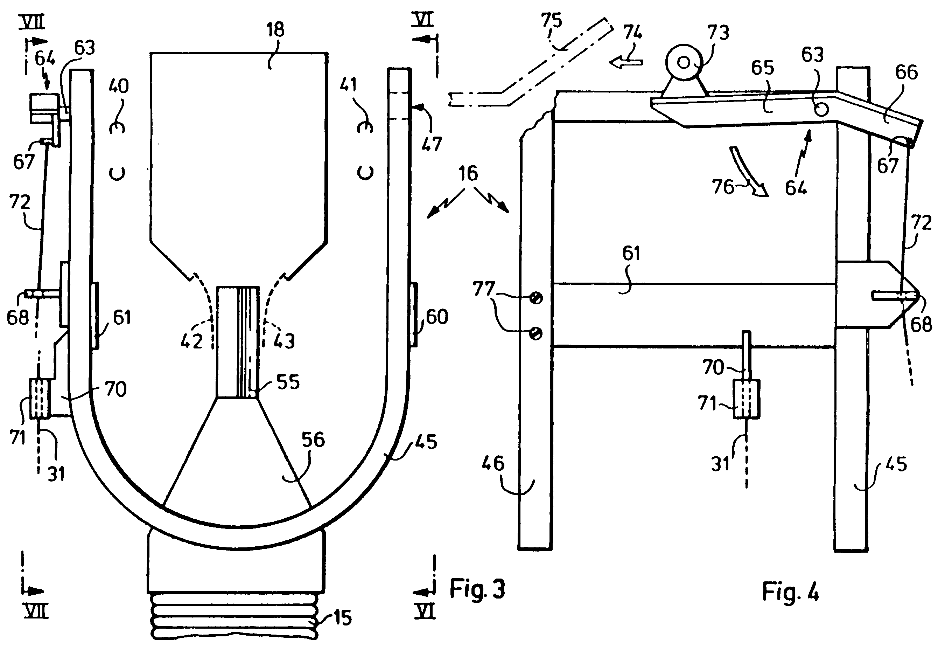

In Fig. 3 und 4 sind erste Einzelheiten der Erfindung hierzu dargestellt, wobei Fig. 4 eine Seitenansicht von Fig. 3 ist.

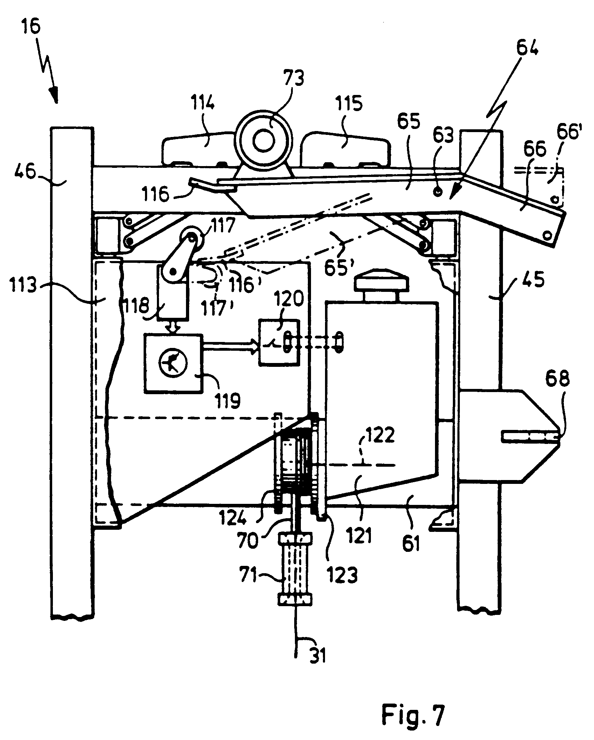

Man erkennt zunächst in Fig. 3 die bereits erwähnte erste Montageplatte 60 und die zweite Montageplatte 61. Auf der Seite der zweiten Montageplatte 61, die - wie weiter unten zu Fig. 7 noch im einzelnen erläutert werden wird - zum Befestigen des Schlauchaufzuges 30 dient, ist am oberen freien Ende zwischen den Bügeln 45, 46 um eine Achse 63 drehbar ein zweiarmiger Hebel 64 angeordnet. Der Hebel 64, wie Fig. 4 zeigt, verfügt über einen langen Arm 65 und einen kurzen Arm 66. Am Ende des kurzen Armes 66 ist ein Stift 67 angeordnet, an dem ein Bowdenzug 72 zum Betätigen der Klemmzange an der Auspufftülle 32 angeordnet ist. Der Bowdenzug 72 durchläuft noch erste Halteöse 68, die seitlich am Bügel 45 angeordnet ist.

Am freien Ende des langen Armes 65 ist eine Rolle 73 befestigt, die sich bei der Fahrt des Wagens 16 mit diesem in einer durch einen Pfeil 74 angedeuteten Richtung bewegt. Am Ende des Bandes 11 läuft die Rolle 73 auf eine schräg nach oben weisende Steuerschiene 75, so daß der lange Arm 65 entlang der Richtung eines Pfeiles 76 nach unten gedreht wird. Demzufolge wird ein Zug über den kurzen Arm 66 auf den Bowdenzug 72 ausgeübt und in der oben beschriebenen Weise die Klemmzange an der Auspufftülle 32 gelöst.

Weiterhin ist am zweiten Montageblech 61 noch ein seitlich vorstehendes Halteblech 70 mit einer Führungsöse 71 angeordnet, durch die das Seil 31 des Schlauchaufzuges 30 läuft.

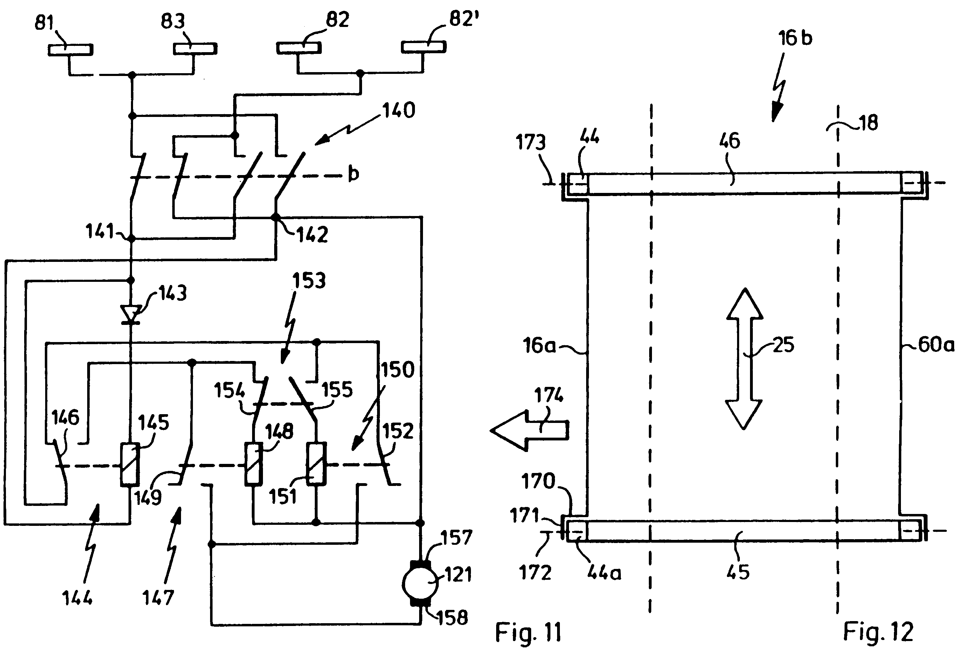

Die Montageplatten 60, 61 sind an den Bügeln 45, 46 erfindungsgemäß lösbar befestigt, wie in Fig. 4 durch Schrauben 77 angedeutet. Bis auf die vorstehend geschilderten Elemente: Hebel 64, Halteöse 68 und Halteblech 70 mit Führungsöse 71 sind daher sämtliche, weiter unten noch beschriebenen mechanischen und elektrischen Aggregate einfach durch Lösen der Schrauben 77 vom Wagen 16 abnehmbar. Eine Variante der Montageplatten 60, 61 ist in Fig. 12 gezeigt.

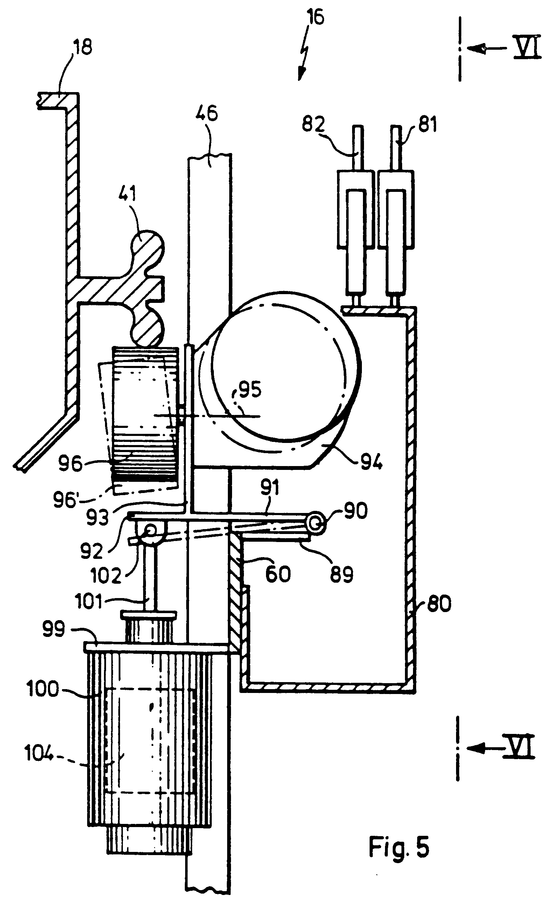

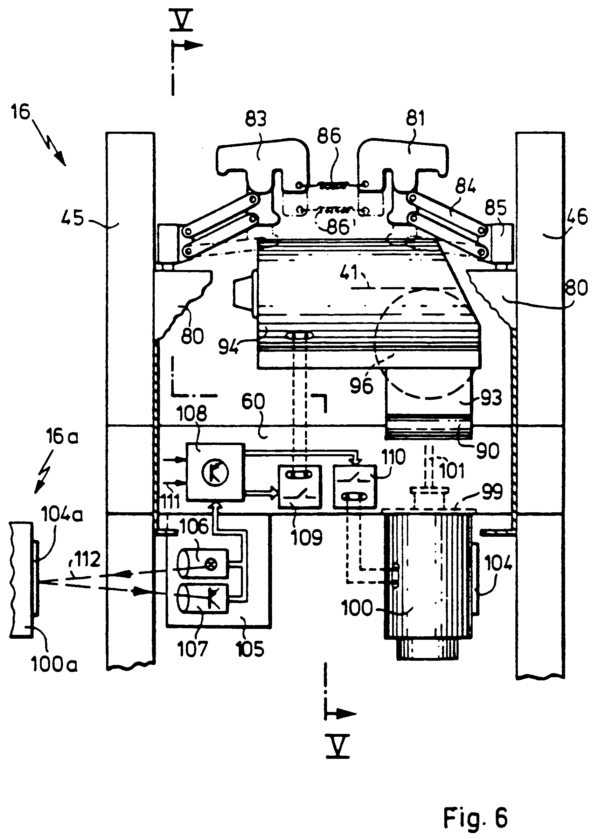

Die mechanischen und elektrischen Aggregate der Transporteinrichtung des Wagens 16 sollen nun anhand der Fig. 5 und 6 näher beschrieben werden.

Diese Aggregate werden praktisch vollkommen von einem Gehäuse 80 geschützt, das in den Fig. 5 und 6 nur ausschnittsweise angedeutet ist. An der Oberseite des Gehäuses 80 befinden sich Stromabnehmer 81, 82, 83, wobei beim dargestellten Ausführungsbeispiel jeweils zwei Stromabnehmer 81, 82 in Fahrtrichtung gesehen nebeneinander und zwei derartige Paare 81, 82; 83 in Fahrtrichtung gesehen hintereinander angeordnet sind. Die Stromabnehmer 81 bis 83 sind mit Parallelogrammführungen 84 an einem Drehgelenk 85 befestigt, so daß sie in der Höhe und - in Fahrtrichtung gesehen - seitlich verschwenkbar sind. Die Drehgelenke 85 sind jeweils an nach außen weisenden Enden der Stromabnehmer 81 bis 83 angeordnet, deren entgegengesetzte Enden einander zuweisen und über eine Feder 86 miteinander verknüpft sind. Auf diese Weise ist die seitliche Auslenkbewegung infolge der Drehgelenke 85 elastisch begrenzt und durch die Feder 86 werden die Stromabnehmer 81 bis 83 jeweils von selbst in eine Stellung zurückgezogen, in der sie in Fahrtrichtung gesehen - miteinander fluchten.

Die mittels der Parallelogrammführungen 84 abgesenkte Stellung der Stromabnehmer 81 bis 83 ist in Fig. 6 gestrichelt angedeutet.

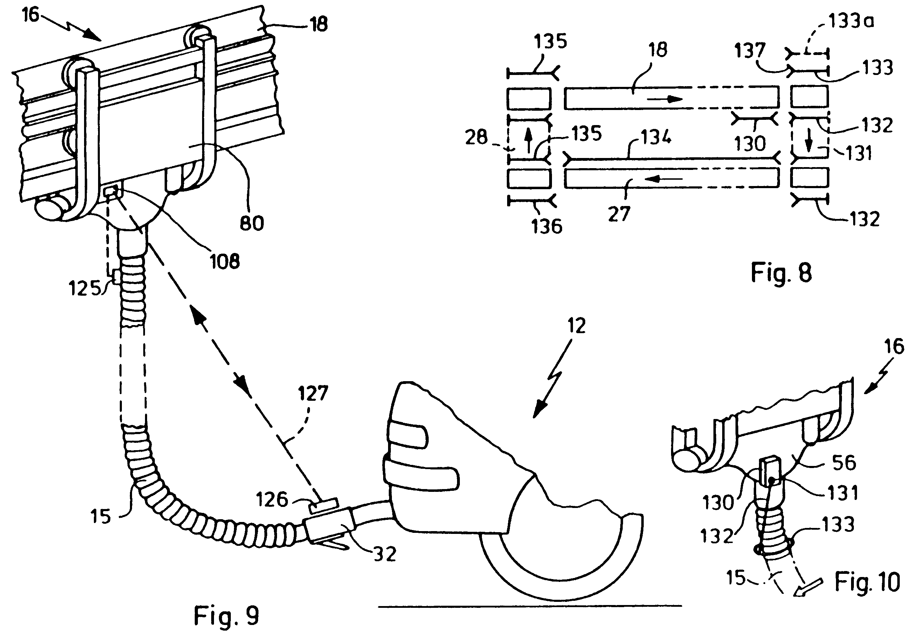

Durch die elastische Kopplung der Stromabnehmer 81 bis 83 mittels jeweils einer Feder 86 für ein hintereinander angeordnetes Paar Stromabnehmer 81, 83 wird sichergestellt, daß auch bei Relativbewegungen des Wagens 16 zu weiter unten noch beschriebenen Stromschienen keine zu große Beanspruchung der Stromabnehmer 81 bis 83 auftritt, außerdem wird das Einfädeln in Gabeln von Stromschienen erleichtert, sei es am Beginn einer mit Stromschienen versehenen Strecke, sei es im Bereich von Trennstellen. Dies wird weiter unten zu Fig. 8 noch im einzelnen erläutert.

Wie man besonders gut aus Fig. 5 ersehen kann, ist an das obere Ende der ersten Montageplatte 60 seitlich ein vom Saugschlitzkanal 18 wegweisender Flansch 89 angebracht, dessen freies Ende mit einem Scharnier 90 versehen ist. Das Scharnier 90 trägt mit seinem zweiten Drehteil eine Hebelplatte 91, die sich in der in Fig. 5 durchgezogen eingezeichneten Stellung etwa parallel zum Flansch 89 erstreckt, und zwar mit ihrem freien Ende 9, zum Saugschlitzkanal 18 hin. Im mittleren Bereich der Hebelplatte 91 erstreckt sich senkrecht nach oben ein Montageflansch 93. Der Montageflansch 93 dient zur Halterung eines Antriebsmotors 94, vorzugsweise eines Scheibenwischermotors. Dessen Abtriebswelle 95 durchsetzt den Montageflansch 93 und trägt an ihrem freien Ende ein Reibrad 96.

An das untere Ende der ersten Montageplatte 60 ist seitlich ein weiterer Flansch 99 angesetzt, der sich zum Saugschlitzkanal 18 hin erstreckt. Dieser weitere Flansch 99 trägt einen Elektromagneten 100, dessen Betätigungsstange 101 nach oben verläuft und in ein Gelenk 102 greift, das am freien Ende 92 der Hebelplatte 91 sitzt. Die Betätigungsstange 101 kann an ihrem oberen Ende aber auch ballig geformt sein und von unten lose am freien Ende 92 anliegen.

In der in Fig. 5 durchgezogen eingezeichneten Stellung der Hebelplatte 91 ist der Elektromagnet 100 erregt. In dieser Betriebsstellung ist die Betätigungsstange 101 nach oben ausgefahren und drückt über die zuvor beschriebene Anordnung das Reibrad 96 gegen das Führungsprofil 41. Ist der Antriebsmotor 94 nicht erregt, wirkt er als Bremse, ist er erregt, fährt der Wagen 16 mit der Kraft des Antriebsmotors 94 entlang der Längsachse des Saugschlitzkanales 18.

Wird nun der Elektromagnet 100 stromlos gemacht, kippt die Hebelplatte 91 aufgrund des Eigengewichtes der Komponenten, insbesondere des Antriebsmotors 94, in die in Fig. 5 gestrichelt eingezeichnete Stellung, bis entweder das Betätigungsglied des Elektromagneten 100 an einen in Fig. 5 nicht dargestellten Anschlag gerät oder die Hebelplatte 91 auf der oberen Kante der ersten Montageplatte 60 aufsetzt. Man erkennt leicht, daß das Reibrad 96' in dieser Stellung vom Führungsprofil 41 getrennt ist, so daß kein Kraftfluß mehr zwischen Antriebsmotor 94 und diesem Führungsprofil 41 besteht. Der Wagen 16 kann in dieser Stellung in der an sich bekannten Weise entlang des Saugschlitzkanales 18 bewegt werden, weil die Rollen 48 bis 54 ihn noch entlang des Führungsprofils 41 halten.

Wird nun der Elektromagnet 100 wieder erregt, wird die Fahrt des Wagens 16 bei nicht eingeschaltetem Antriebsmotor 94 abgebremst bzw. bei eingeschaltetem Antriebsmotor 94 beschleunigt.

Aus Fig. 6 erkennt man, daß auf der ersten Montageplatte 60 ein elektrisches Schaltgerät 108 angeordnet ist, das zur Steuerung der Antriebsfunktionen dient.

Bei einem Ausführungsbeispiel der Erfindung ist der nach unten weit über die erste Montageplatte 60 vorstehende Elektromagnet 100 an seiner in Fahrtrichtung nach hinten weisenden Seite mit einer Reflexionsplatte 104 versehen. An dem in Fahrtrichtung nach vorne weisenden Ende des Wagens 16 steht von der ersten Montageplatte 60 nach unten ein Montageblech 105 ab, das einen Lichtsender 106 und einen Lichtempfänger 107 trägt. Ein vom Lichtsender 106 ausgesandter Lichtstrahl 112 wird bei Annäherung an einen vorausfahrenden oder haltenden Wagen 16a von dessen Reflexionsplatte 104a reflektiert, die an dessen Elektromagnet 100a angebracht ist, und gelangt auf den Lichtempfänger 107. Lichtsender 106 und Lichtempfänger 107 stehen - wie in Fig. 6 eingezeichnet - in Wirkungsverbindung mit dem Schaltgerät 108. Bei Unterschreiten eines vorgegebenen Mindestabstandes zum vorausfahrenden Wegen 16a oder einem sonstigen ortsfesten oder bewegten Hindernis kann nun beispielsweise zunächst ein erstes Relais 109 betätigt werden, mit dem der Antriebsmotor 94 stromlos gemacht wird. Der Antriebsmotor 94 dient nun als Bremse, bis kurz danach vom Schaltgerät 100 ein zweites Relais 110 betätigt wird, das den Elektromagneten 100 stromlos macht. Der Elektromagnet 100 trennt in der vorstehend zu Fig. 5 beschriebenen Weise den Kraftfluß zum Führungsprofil 41 auf, so daß der Wagen weich in einem vorgegebenen Mindestabstand zu einem vorausfahrenden Wagen 16a zum Stehen kommt.

Entfernt sich der vorausfahrende oder stehende Wagen 16a nun wieder, beispielsweise weil er aus dem Bereich der Rücklaufbahn 27 mittels des Umsetzers 28 in den Bereich des Saugschlitzkanales 18 gefahren wurde, wird dies von dem aus den Elementen 106, 107 bestehenden Näherungsschalter erkannt und durch sukzessives oder gleichzeitiges Betätigen der Relais 109, 110 wird der Antriebsmotor 94 angekuppelt und eingeschaltet, so daß der Wagen 16 nach rücken kann.

Es versteht sich, daß statt des optischen Näherungsschalters auch sonstige Näherungsschalter drahtloser Art ebenso wie Berührungsschalter verwendet werden können.

Man erkennt aus Fig. 6 weiter, daß das Schaltgerät 108 noch mit Fremdeingängen 111 versehen ist, um weitere Steuerungsfunktionen ausführen zu können, wie sie weiter unten zu Fig. 9 noch beschrieben werden.

Nachfolgend sollen die mechanischen und elektrischen Komponenten des Schlauchaufzuges 30 anhand der Detaildarstellung von Fig. 7 beschrieben werden:
Die zweite Montageplatte 61 dient in ähnlicher Weise, wie dies vorstehend zu den Fig. 5 und 6 beschrieben wurde, als tragendes Element für die Komponenten des Schlauchaufzuges 30, die somit insgesamt durch Lösen von Schrauben von den Bügeln 45, 46 abnehmbar sind.

Ein Gehäuse 113, das in Fig. 7 lediglich abgebrochen dargestellt ist, umgibt die wesentlichen Komponenten. An der Oberseite des Gehäuses 113 sind wiederum zwei Paare Stromabnehmer 114, 115 angeordnet, wie dies bereits geschildert wurde.

Der lange Arm 65 des zweiarmigen Hebels 64 ist mit einer Schaltzunge 116 versehen, die bei normaler Fahrt des Wagens 16 in der in Fig. 7 durchgezogen gezeichneten Stellung verharrt. Hierzu ist eine in Fig. 7 im einzelnen nicht dargestellte Rückstellfeder vorgesehen. Wie bereits weiter oben zu Fig. 4 erläutert, wird der zweiarmige Hebel 64 bei Auflaufen auf eine Steuerschiene 75 nach unten in die in Fig. 7 gestrichelt eingezeichnete Stellung verschwenkt.

In Reichweite der Schaltzunge 116 ist eine Rolle 117 eines Schaltarmes eines Schalters 118 angebracht. Im ausgelenkten Zustand 65' des langen Armes 65 drückt die Schaltzunge 116' die Rolle 117' in die gestrichelt eingezeichnete Stellung und betätigt damit den Schalter 118. Ein elektrisches Schaltgerät 119 steuert dann ein Relais 120 an, das einen Antriebsmotor 121, beispielsweise einen Scheibenwischermotor, einschaltet. Der Antriebsmotor 121 sitzt auf einem Montageflansch 123, der sich seitlich von der zweiten Montageplatte 61 weg erstreckt. Eine in Fig. 7 nur schematisch angedeutete Abtriebswelle 122 des Antriebsmotors 121 verläuft durch den Montageflansch 123 hindurch und trägt an ihrem freien Ende eine Trommel 124 zum Aufwickeln des Seiles 31 sowie einen angeflanschten Endschalter zur Begrenzung der Hubbewegung des Schlauches. Einen Stromlaufplan einer Variante des Schaltgerätes 119 zeigt Fig. 11.

Die Wirkungsweise der Stromabnahme zur Versorgung der elektrischen Aggregate des Wagens 16 soll nun anhand von Fig. 8 am Beispiel einer Endmontage erläutert werden, wie sie in Fig. 1 mit 10 bezeichnet war.

Man erkennt in Fig. 8 zunächst parallel zueinander angeordnet den Saugschlitzkanal 18 und die Rücklaufbahn 27, auf denen sich die Wagen gegenläufig bewegen. Am Ende des Saugschlitzkanales 18 ist auf der rechten Seite eine erste Stromschiene 130 angeordnet, die über eine Trennstelle zu einem hinteren Umsetzer 131 in eine zweite Stromschiene 132 übergeht. Auf der linken Seite befindet sich entsprechend im Bereich des Umsetzers 131 eine dritte Stromschiene 133, die wegen der nebeneinander angeordneten Stromabnehmer 81, 82 (s. Fig. 5) auch mehrfach ausgeführt sein kann, wie dies mit 133a angedeutet ist. Im Bereich der Rücklaufbahn 27 ist - nunmehr in umgekehrter Fahrtrichtung gesehen - auf der rechten Seite eine vierte Stromschiene 134 angeordnet, die im Bereich des vorderen Umsetzers 28 in eine Stromschiene 135 übergeht. An dieser Stelle ist auf der linken Seite eine sechste Stromschiene 136 vorgesehen.

An den Ein- und Ausfahrtsenden der Stromschienen, insbesondere an den Trennstellen, sind die Stromschienen mit Gabeln 137 versehen, wie am Beispiel der dritten Stromschiene 133 in Fig. 8 angedeutet.

Wenn ein Wagen das Ende des Saugschlitzkanales 18 erreicht, gelangen die Stromabnehmer 114, 115 der rechten Wagenseite in Eingriff mit der ersten Stromschiene 130, wobei die oben beschriebene elastische Lagerung der Stromabnehmer 114, 115 ein sicheres Einfahren in die Gabel der ersten Stromschiene 130 garantiert. Auf diese Weise kann am Ende des Saugschlitzkanales 18 der Schlauchaufzug 30 in Betrieb genommen und der Schlauch 15 eingezogen werden, nachdem über den zweiarmigen Hebel 64 und den Bowdenzug 72 die Klemmzange an der Auspufftülle 32 gelöst wurde. Weil dieser Aufzugsvorgang für den Schlauch einige Zeit in Anspruch nimmt, ist im Bereich des hinteren Umsetzers 131 die zweite Stromschiene 132 vorgesehen, die eine fortwährende Stromversorgung des Schlauchaufzuges 30 auch im Bereich des Umsetzers 131 garantiert.

Sobald der Wagen in den Bereich des hinteren Umsetzers 131 einfährt, kann dort die dritte Stromschiene 133 bzw. 133a vorgesehen sein, wobei zwei Stromschienen 133, 133a vorgesehen sind, um mit den beiden nebeneinander angeordneten Paaren 81, 83 bzw. 82 von Stromabnehmern im Bereich der Antriebsseite separat zusammenzuwirken.

Der Wagen 16 kann nun entweder durch Einschalten des Elektromagneten 100 und des Antriebsmotors 94 aus eigener Kraft durch den hinteren Umsetzer 131 bzw. Bogen fahren oder, beispielsweise mit einem Langhub-Pneumatikzylinder, durch Fremdkraft umgesetzt werden. Sobald der Wagen 16 jedoch mit der Rücklaufbahn 27 fluchtet, fährt er aus eigener Kraft in deren Bereich aus, wobei er über die vierte Stromschiene 134, die selbstverständlich ebenfalls doppelt ausgebildet sein kann, Betriebsspannung für den Antriebsmotor 94 und den Elektromagneten 100 erhält. In diesem Bereich braucht keine Stromschiene für den Schlauchaufzug 30 vorgesehen zu sein, weil der Schlauch eingezogen ist und in diesem Bereich nicht ausgefahren zu werden braucht.

Im Bereich des vorderen Umsetzers 28 wiederholt sich nun das Spiel in der Weise, daß nunmehr auch die Seite des Schlauchaufzuges 30 über die sechste Stromschiene 136 Spannung erhält, so daß der Schlauch wieder ausgefahren werden kann, während der Wagen im Bereich des vorderen Umsetzers 28 umgesetzt wird. Die Antriebsaggregate stehen über die fünfte Stromschiene 135 und ggf. eine weitere parallele Stromschiene unter Spannung, so daß der Wagen, sobald er umgesetzt wurde, aus eigener Kraft in den Bereich des Saugschlitzkanales 18 ausfahren kann. Es kann im Bereich des Saugschlitzkanales 18 auch eine durchgehende Stromversorgung für den Antrieb vorgesehen sein, sofern ein Eigenantrieb in diesem Bereich gewünscht ist.

In Fig. 9 sind zwei Ausführungsbeispiele für einen derartigen Eigenantrieb im Bereich des Saugschlitzkanales 18 veranschaulicht.

Beim ersten Ausführungsbeispiel ist im Bereich des Schlauches 15 ein Dehnungs-Sensor 125 angeordet, der mit dem Schaltgerät 108, und zwar über einen seiner Fremdeingänge 111, in Verbindung steht. Sobald das Kraftfahrzeug 12 vom Band 11 bewegt wird und am Schlauch 15 zieht, erkennt der Dehnungs-Sensor 125 diesen Zustand und veranlaßt die Antriebsaggregate des Wagens 16, den Wagen 16 so lange vorzufahren, wie eine Zugspannung im Schlauch 15 wirkt. Diese Zugspannung im Schlauch kann daher auf einer Miminalwert begrenzt werden.

Bei einem weiteren Ausführungsbeispiel gemäß Fig. 9, das alternativ oder auch in geeigneter Kombination mit dem zuvor geschilderten Ausführungsbeispiel verwendet werden kann, ist am Ende des Schlauches 15, beispielsweise an der Auspufftülle 32, ein Sender-Empfänger angeordnet, der mit einem entsprechenden Empfänger/Sender im Bereich des Schaltgerätes 108 zusammenwirkt, beispielsweise über einen Lichtstrahl 127, eine Ultraschallverbindung oder dergleichen.

Die Einrichtungen im Bereich des Schaltgerätes 108 und der Sender/Empfänger 126 wirken nun in der Weise zusammmen, daß bei Überschreiten eines gewissen Mindestabstandes ein Signal ausgelöst wird, das zum Ingangsetzen der Antriebseinrichtungen des Wagens 16 dient. Dieser bewegt sich daher hinter dem Kraftfahrzeug 12 her. Es versteht sich, daß an den unterschiedlichen Wagen 16 der Endmontage 10 unterschiedlich kodierte Einrichtungen verwendet werden können, um unerwünschte Wechselwirkungen auszuschließen.

Fig. 10 zeigt eine weitere Variante, bei der sich am Spritzteil 56 des Wagens 16 ein Pendelschalter 130 befindet. Der Pendelschalter 130 weist ein Gelenk 131 auf, an dem ein Schaltarm 132 angeordnet ist, der in einen den Schlauch 15 umgreifenden Ring 133 ausläuft. Wird der Schlauch 15 nun durch ein angeschlossenes Kraftfahrzeug in Richtung des Pfeiles von Fig. 10 ausgelenkt, bewegt sich der Ring 133 mit, der Arm 132 vollführt eine Schwenkbewegung und der Pendelschalter 130 spricht an. Das Gelenk 131 kann dabei einachsig ausgebildet sein, so daß der Pendelschalter 130 nur bei einer Auslenkung des Ringes 133 in Förderrichtung der Kraftfahrzeuge anspricht.

Fig. 11 zeigt einen Stromlaufplan einer Variante des Schaltgeräts 119 in Fig. 7. Die Antriebs- und Schalteinheiten stimmen ansonsten mit derjenigen von Fig. 7 überein, mit der Abweichung, daß am zweiarmigen Hebel 64 keine Schaltzunge 116 und entsprechend auch kein Schalter 118 mit Rolle 117 vorgesehen ist.

Der Stromlaufplan gemäß Fig. 11 geht von paarweise verlegten Stromschienen aus, wie dies in Fig. 8 mit 133, 133a bereits angedeutet wurde. Zu jeder Schiene dieses Paares gehört, wie man dies beispielsweise aus den Fig. 5 und 6 deutlich erkennen kann, jeweils ein Paar hintereinander angeordneter Stromabnehmer 81, 83 bzw. 82, 82'. Diese, hintereinander angeordneten, Stromabnehmer sind jeweils miteinander elektrisch verbunden und auf Schaltkontakte eines Handschalters 140 geführt, der in den Schaltstellungen "Automatisch", "Null" und "Hand" schaltbar ist. Fig. 11 zeigt die Schaltstellung "Automatisch".

Ausgangsseitig liegen am Handschalter 140 ein erster Schaltungsknoten 141 und ein zweiter Schaltungsknoten 142 vor. Der Schaltungsknoten 141 ist in der in Fig. 11 eingezeichneten Stellung mit den Stromabnehmern 81, 83, und der Schaltungsknoten 142 ist mit den Stromabnehmern 82, 82' verbunden.

Als weitere Schaltungselemente sind eine Diode 143, ein erstes Relais 144 mit Erregerwicklung 145 und Umschaltkontakt 146, ein zweites Relais 147 mit Erregerwicklung 148 und Umschaltkontakt 149, ein drittes Relais 150 mit Erregerwicklung 151 und Umschaltkontakt 152 sowie ein Endschalter 153 vorgesehen, dessen Schaltkontakte 154, 155 bei Erreichen einer Endstellung des Antriebsmotors 121 paarweise umgeschaltet werden. Die Anschlußklemmen des Antriebsmotors 121 sind mit 157 und 158 bezeichnet.

Das Schaltschema und die Wirkungsweise der Anordnung gemäß Fig. 11 sind wie folgt:
Fig. 11 zeigt die Relais 144, 147, 150 jeweils im unerregten Zustand. Der Endschalter 153 befindet sich in der Stellung, in die er am Ende des Aufwickelvorganges in der oberen Endlage geschaltet wurde.

Es sei nun angenommen, daß der Wagen 16 in den Bereich der in Fig. 8 mit 136 bezeichneten Stromschiene gelangt, in der der Schlauch abgewickelt werden soll. Es sei angenommen, daß in diesem Bereich die Stromabnehmer 81, 83 an positiver und die Stromabnehmer 82, 82' an negativer Spannung liegen.

Die erste Anschlußklemme 157 des Antriebsmotors 121 ist fest mit dem zweiten Schaltungsknoten 142 verbunden und liegt damit in diesem Betriebsfall auf negativer Spannung. Dies gilt auch für den unteren Anschluß der Erregerwicklung 145 des ersten Relais 144.

Vom ersten Schaltungsknoten 141 fließt nun ein Strom durch die in Durchlaßrichtung gepolte Diode 143, so daß die Erregerwicklung 145 erregt wird und der Umschaltkontakt 146 in die in Fig. 11 nicht gezeichnete Stellung umgeschaltet wird. Damit gelangt positive Spannung über den geschlossenen Schaltkontakt 154 des Endschalters 153 an die Erregerwicklung 148 des zweiten Relais 153, dessen anderer Anschluß an negativer Betriebsspannung liegt. Es wird damit auch das zweite Relais 147 umgeschaltet und der Umschaltkontakt 149 damit in die in Fig. 11 nicht gezeichnete Stellung umgelegt.

Auf diese Weise gelangt positive Betriebsspannung auch an die zweite Anschlußklemme 158, und der Antriebsmotor 121 dreht sich in Abwickelrichtung des Schlauches, bis die untere Endstellung erreicht ist.

Bei Erreichen der unteren Endstellung wird der Endschalter 153 umgeschaltet, und der Schaltkontakt 154 öffnet sich, so daß nun das zweite Relais 147 abfällt und den Umschaltkontakt 149 in die in Fig. 11 eingezeichnete Stellung öffnet. Damit wird die zweite Anschlußklemme 158 stromlos, und der Antriebsmotor 121 bleibt stehen.

Da sich der Wagen nach wie vor im "Abwickelbereich" der Stromschiene 136 befindet, verbleibt die Diode 143 in Durchlaßrichtung, und das erste Relais 144 bleibt erregt. Es hat daher keinen Einfluß, daß bei Erreichen der unteren Endstellung gleichzeitig der Schaltkontakt 155 geschlossen wurde, weil sich der Umschaltkontakt 146 noch in der in Fig. 11 nicht eingezeichneten, umgeschalteten Stellung befindet.

Die Verhältnisse ändern sich erst, wenn der Wagen in einen "Aufwickelbereich", beispielsweise in den Bereich der Stromschiene 130 in Fig. 8 gelangt. Nun liegt an den Stromabnehmern 81, 83 negative und an den Stromabnehmern 82, 82' positive Betriebsspannung.

Durch die feste Verbindung des zweiten Schaltungsknotens 142 mit der ersten Anschlußklemme 157 liegt dort nun positive Betriebsspannung.

Die Diode 143 ist nun allerdings in Sperrichtung geschaltet, so daß das erste Relais 144 unerregt bleibt und sich der Umschaltkontakt 146 in der in Fig. 11 eingezeichneten Stellung befindet. Über diesen Schaltungspfad gelangt nun negative Betriebsspannung über den nunmehr geschlossenen Schaltkontakt 155 des Endschalters 153 auf die Erregerwicklung 151 des dritten Relais 150, so daß der Umschaltkontakt 152 in die in Fig. 11 nicht eingezeichnete Stellung gelangt. Damit ist auch die zweite Anschlußklemme 158 mit negativer Betriebsspannung beschaltet, und der Antriebsmotor 121 läuft in Aufwickelrichtung, bis er wieder seine obere Endstellung erreicht.

Dies hat zur Folge, daß der Endschalter 153 wieder in die in Fig. 11 eingezeichnete Stellung umgeschaltet wird, so daß durch Öffnen des Schaltkontaktes 155 das dritte Relais 150 abfällt und die zweite Anschlußklemme 158 stromlos macht.

Da auch in diesem Falle der Wagen im "Aufwickelbereich" verbleibt und die Diode 143 somit in Sperrichtung liegt, hat das Schließen des Schaltkontakts 154 des Endschalters 153 keinen Einfluß, weil das erste Relais 144 unerregt bleibt.

Erst wenn der Wagen wieder in einen "Abwickelbereich" gelangt, wiederholt sich das zuvor beschriebene Spiel.

Es versteht sich, daß der in Fig. 11 in allen Einzelheiten dargestellte Stromlaufplan nur als Beispiel zu verstehen ist und daß es lediglich darauf ankommt, eine Anschlußklemme des Antriebsmotors 121 ständig mit einem der Stromabnehmer zu verbinden, während an die andere Anschlußklemme über Schaltstrecken jeweils der andere Stromabnehmer angeschlossen wird, wobei diese Schaltstrecken vom Endschalter betätigt werden und die Verbindung zu dem anderen Stromabnehmer polaritätsabhängig gesteuert wird.

Schließlich zeigt Fig. 12 noch in Draufsicht eine Variante eines Wagens 16b, der in Richtung des Pfeiles 25 entlang dem Saugschlitzkanal 18 verfahren wird.

Der Wagen 16b verfügt an den senkrechten Abschnitten 44, 44a der U-förmigen Bügel 45, 46 über Montageplatten 60a, 61a, die sich von den Montageplatten 60, 61 der Fig. 2 bis 7 dadurch unterscheiden, daß sie an ihren Enden zweimal um 90° in Schenkel 170, 171 umgebogen sind. Die Montageplatten 60a, 61a können somit seitlich von außen zwischen die senkrechten Abschnitte 44, 44a eingesteckt werden, so daß sie mit der Innenkante der senkrechten Abschnitte 44, 44a fluchten und damit eine geringe seitliche Bautiefe des Wagens 16b ermöglichen. Andererseits sind die Montageplatten 60a, 61a aber im Bereich der Schenkel 171 mit Schrauben 172, 173 von außen an den senkrechten Abschnitten 44, 44a befestigt, so daß beispielsweise die Montageplatte 61a nach Lösen der Schrauben 172, 173 von außen in Richtung des Pfeiles 174 abgenommen werden kann.

Es kann auf diese Weise mit wenigen Handgriffen eine Montageplatte mit allen daran befestigten Antriebs- und Steuereinheiten vom Wagen 16b abgenommen werden, so daß der Kundendienst und eventuelle Reparaturen hierdurch sehr erleichtert werden.

## Patentansprüche

1. Einrichtung zum Absaugen und Sammeln von Gasen, insbesondere von Kraftfahrzeug-Auspuffgasen, in einer Montage- oder Betriebshalle, mit
- einem raumfesten Saugschlitzkanal (18), der an einer Seite mit einer elastischen, axial verlaufenden Lippendichtung (42, 43) versehen ist,
- mindestens einem axial entlang von Führungsprofilen (40, 41) bewegbaren Wagen (16), der eine Saugdüse (55) aufweist, die in der Lippendichtung (42, 43) dicht geführt ist, wobei der Wagen (16) mit einem Antriebsmotor (94) mit Abtriebswelle (95) versehen ist, der ein den Wagen (16) bewegendes, an das Führungsprofil (41) anliegendes Reibrad (96) aufweist, und
- einem Sauggebläse (20), das an den Saugschlitzkanal (18) angeschlossen ist und in der Saugdüse (55) sowie einem daran angeschlossenen Schlauch (15) einen Unterdruck erzeugt,
dadurch gekennzeichnet, daß der Wagen (16) mittels Rollen (48-51) an den Führungsprofilen (40, 41) geführt und gehalten ist, daß die Abtriebswelle (95) direkt das Reibrad (96) trägt, und daß ein elektrisch schaltbares Kupplungselement zum Trennen bzw. Schließen des Kraftflusses zwischen Antriebsmotor (94) und Führungsprofil (41) vorgesehen ist.

2. Einrichtung nach Anspruch 1, dadurch gekennzeichnet, daß der Wagen (16) einen Rahmen aus Bügeln (45, 46) mit Abschnitten (44) aufweist, die in einer zur Längsachse des Saugschlitzkanales (18) parallelen Ebene liegen, daß die Abschnitte (44) zweier Bügel (45, 46) mit einer lösbaren ersten Montageplatte (60, 60a) versehen sind, daß der Antriebsmotor (94) an der ersten Montageplatte (60) und daß ein Schlauchaufzug (30) an der zweiten lösbaren Montageplatte (61, 61a) angeordnet ist.

3. Einrichtung nach einem der Ansprüche 1 oder 2, dadurch gekennzeichnet, daß die Lage des Antriebsmotors (94) relativ zum Führungsprofil (41) mittels eines Elektromagneten (100) veränderbar ist, wobei vorzugsweise der Antriebsmotor an einem mittels eines Gelenkes schwenkbaren Hebel (91, 92, 93) angeordnet ist, an dessen einem Arm der Elektromagnet (100) angreift.

4. Einrichtung nach Anspruch 2 und 3, dadurch gekennzeichnet, daß die erste Montageplatte (60) parallel zur Längsachse des Saugschlitzkanales (18) verläuft und einen von dem in unmittelbarer Nähe des Saugschlitzkanales (18) angeordneten Führungsprofil (41) vegweisenden Flansch (89) aufweist, dessen freies Ende mit einem Scharnier (90) versehen ist, das weiterhin eine zum Saugschlitzkanal (18) weisende Hebelplatte (91) trägt, an deren freiem Ende (92) eine Betätigungsstange (101) des ebenfalls an der Montageplatte (60) befestigten Elektromagneten (100) angreift und daß der Antriebsmotor (94) von einem weiteren, an der Hebelplatte (91) angeordneten Montageflansch (93) gehalten wird, wobei vorzugsweise die Hebelplatte (91) beim Schließen des Kraftflusses angehoben wird.

5. Einrichtung nach einem der vorhergehenden Ansprüche, dadurch gekennzeichnet, daß ein Schaltgerät (108) mit einem Näherungsschalter (104 bis 107) gekoppelt ist, der in Fahrtrichtung des Wagens (16) wirkt und bei Annäherung an ein Hindernis mindestens das Kupplungselement betätigt.

6. Einrichtung nach einem der vorhergehenden Ansprüche, dadurch gekennzeichnet, daß ein Schaltgerät (108) mit einem Dehnungs-Sensor (125) gekoppelt ist, der am Schlauch (15) befestigt ist, derart, daß bei Überschreiten einer vorgegebenen Dehnung des Schlauches (15) der Kraftfluß geschlossen wird.

7. Einrichtung nach einem der vorhergehenden Ansprüche, dadurch gekennzeichnet, daß für den Antriebsmotor (94), das Kupplungselement und ggf. den Schlauchaufzug (30) jeweils getrennte Stromabnehmer (81 bis 83, 114, 115) und jeweils getrennte Stromschienen (130, 132 bis 136) vorgesehen sind.

8. Einrichtung nach Anspruch 7, dadurch gekennzeichnet, daß der Schlauchaufzug (30) einen Gleichstrommotor (121) als Antrieb enthält und daß die paarweise ausgebildeten Stromschienen (130, 132, 136) erste Abschnitte (130, 132) umfassen, auf denen sie zum Aufwickeln des Schlauches (15) eine erste Polarität der Betriebsspannung aufweisen, während zweite Abschnitte (136) zum Abwickeln mit einer zweiten Polarität beschaltet sind, wobei vorzugsweise eine erste Anschlußklemme (157) des Motors (121) fest mit den Stromabnehmern (82, 83) der einen Schiene des Paares Stromschienen (130, 132, 136) verbunden ist, und daß eine zweite Anschlußklemme (158) mit zwei Schaltstrecken (147, 148, 149; 150, 151, 152) in Verbindung steht, die über ein wechselseitig betätigbares Endschalterpaar (153, 154, 155) des Motors (121) steuerbar sind, wobei die Schaltstrecken (147, 148, 149; 150, 151, 152) mit den Stromabnehmern (81, 82) der anderen Schiene über einen Umschalter (144, 145, 146) verbindbar sind, der in Abhängigkeit von der an einer der Schienen vorliegenden Polarität betätigtwird.

9. Einrichtung nach Anspruch 8, dadurch gekennzeichnet, daß der Umschalter (144, 145, 146) über eine Diode (143) betätigt wird, die mit einer der Schienen verbunden ist.

10. Einrichtung nach einem der Ansprüche 7 bis 9, dadurch gekennzeichnet, daß der Wagen (16) in Fahrtrichtung mit zwei hintereinander angeordneten Stromabnehmern (81, 83, 114, 115) versehen ist, die vorzugsweise an ihren einen Enden über eine Feder (86) miteinander verbunden, an ihren entgegengesetzten Enden seitlich zur Fahrtrichtung schwenkbar und in der Höhe schwenkbar angeordnet sind.

11. Einrichtung nach einem der Ansprüche 2 bis 10, dadurch gekennzeichnet, daß die erste Montageplatte (60, 60a) dem Antriebsmotor (94), dem Kupplungselement sowie den zugehörigen Stromabnehmern (81 bis 83) und Stromschienen (133, 133a, 134, 135) auf der einen Seite und die zweite Montageplatte (61, 61a) mit dem Schlauchaufzug (30) sowie den zugehörigen Stromabnehmern (114, 115) mit Stromschienen (130, 132, 136) auf der anderen Seite des Wagens (16) angeordnet sind, wobei vorzugsweise die Montageplatten (60a, 61a) seitlich von außen an den Wagen (16) geschraubt sind.

12. Einrichtung nach einem der Ansprüche 7 bis 11, dadurch gekennzeichnet, daß der Saugschlitzkanal (18) neben einer Rücklaufbahn (27) verläuft, deren Enden jeweils über Umsetzer (28, 131) oder Führungsprofil-Bögen miteinander verbunden sind, wobei mindestens die Rücklaufbahn (27) mit Stromschienen (134) für den Antriebsmotor (94) und das Kupplungselement versehen und wobei ferner mindestens die Umsetzer (28, 131) bzw. Bögen mit Stromschienen (132, 133, 133a, 135, 136) für den Schlauchaufzug (30) und ggf. den Antriebsmotor (94) sowie das Kupplungselement versehen sind.

## Claims

1. An apparatus for exhausting and collecting gases, in particular motor vehicle exhaust gases, in an assembly or a service hall, comprising:
- a stationary slotted exhaust conduit (18) being provided with an elastic, axially extending lip seal (42, 43) on one side thereof,
- at least one carriage (16) being axially movable along guide rails (40, 41), the carriage (16) having a suction nozzle (55) being guided snugly within the lip seal (42, 43), the carriage (16) being provided with a drive motor (94) having an output shaft (95), the drive motor (94) being provided with a friction wheel (96) for moving the carriage (16) and for being brought into engagement with the guide rail (40, 41), and
- an exhaust blower (20) being connected to the slotted exhaust conduit (18) for generating a partial vacuum within the suction nozzle (55) and within a hose (15) connected thereto,
characterized in that the carriage (16) is guided and supported on the guide rails (40, 44) by means of rollers (48 - 51), that the output shaft (95) directly carries the friction wheel (96), and that an electrically switchable coupling element is provided for opening and closing, respectively, the flow of force between the drive motor (94) and the guide rail (41).

2. The installation of claim 1, characterized in that the carriage (16) comprises a frame composed of stirrups (45, 46) with sections (44) lying in a plane extending in parallel to the longitudinal axis of the slotted exhaust conduit (18), that the sections of two stirrups (45, 46) are provided with a detachable first mounting plate (60, 60a) that the drive motor (94) is provided on the first mounting plate (60), and that a hose lift (30) is arranged on the second detachable mounting plate (61, 61a).

3. The installation according to any of claims 1 or 2, characterized in that the position of the drive motor (94) relative to the guide section (41) can be varied by means of an electromagnet (100) wherein preferably the drive motor is arranged on a lever (91, 92, 93) which can be pivoted by means of a joint and one arm of which is engaged by the electromagnet (100).

4. The installation according to claim 2 and 3, characterized in that the first mounting plate (60) extends in parallel to the longitudinal axis of the slotted exhaust conduit (18) and is provided with a flange (89) directed away from the guide section (41) arranged in the immediate vicinity of the slotted exhaust conduit t18), that the free end of the flange is provided with a hinge (90) carrying a lever plate (91) which points towards the slotted exhaust conduit (18) and the free end (92) of which is engaged by an actuating rod (101) of the electromagnet (100) which is likewise mounted on the mounting plate and that the drive motor (94) is held on a further mounting flange (93) provided on the lever plate (91) wherein the lever plate (91) is preferably lifted when flux of driving force is closed.

5. The installation according to any of the preceding claims, characterized in that a switching device (108) is coupled with a proximity switch (104 to 107) acting in the travelling direction of the carriage (16) and operating at least the coupling element when the carriage approaches an obstacle.

6. The installation according to any of the preceding claims, characterized in that the switching device (108) is coupled with an elongation sensor (125) mounted on the hose (15) in such a manor that the flux of driving force is closed when a pre-determined amount of elongation of the hose (15) is exceeded.

7. The installation according to any of the preceding claims, characterized in that separate collector shoes (81 to 83, 114, 115) and separate contact rails (130, 132 to 136) are provided for the drive motor (94), the coupling element and, if necessary, the hose lift (30).

8. The installation according to claim 7, characterized in that the hose lift (30) comprises a direct current motor (121) as a drive and that the contact rails (130, 132, 136) which are arranged in pairs comprise first sections (130, 132) exhibiting a first polarity for winding up the hose (15), while second sections (136) exhibit a second polarity for unwinding the hose, wherein preferably a first terminal (157) of the motor C121) is permanently connected with the collector shoes (82, 83 ) of the one rail of the pair of contact rails (130, 132, 136) and that a second terminal (158) is connected with two switching sections (147, 148, 149; 150, 151, 152) which can be controlled via an alternately operable pair of limit switches (153, 154, 155) of the motor (121), the switching sections (147, 148, 149; 150, 151, 152) being connectable with the collector shoes (81, 82) of the other rail via a change-over switch (144, 145, 146) which is operated in response to the polarity present at one of the rails.

9. The installation according to claim 8, characterized in that the change-over switch (144, 145, 146) is actuated via a diode (143) connected with one of the rails.

10. The installation according to any of claims 7 through 9, characterized in that the carriage (16) is equipped with two collector shoes (81, 83, 114, 115) arranged one behind the other in the travelling direction, the collector shoes (81, 83, 114, 115) being preferably interconnected at their ends by a spring (86) and that their opposite ends are arranged to pivot laterally relative to the travelling dirction.

11. The installation according to any of claims 2 through 10, characterized in that the first mounting plate (60, 60a) with the drive motor (94), the coupling element and the associated collector shoes (81 through 83) and contact rails (133, 133a, 134, 135) are arranged on the one side, and the second mounting plate (61, 61a) with the hose lift (30) and the associated collector shoes (114, 115) and contact rails (130, 132, 136) is arranged on the other side of the carriage, wherein preferably the mounting plates (60a, 61a) are bolted to the carriage (16) laterally from the outside.

12. The installation according to any of claims 7 through 11, characterized in that the slotted exhaust conduit (18) extends along the side of a return track (27) which have their respective ends interconnected by transposition means (18, 131) or guide section bends, and in which at least the return track (27) is provided with contact rails (134) for the drive motor (94) and the coupling element and at least the transposition means (28, 131) and/or the bends are provided with contact rails (132, 133, 133a, 135, 136) for the hose lift (39) and, if necessary, also for the drive motor (94) and the coupling element.

## Revendications

1. Dispositif pour l'aspiration et le rassemblement de gaz, en particulier de gaz d'échappement de véhicules automobiles dans un hall de montage ou d'exploitation :
- avec un canal d'aspiration à fente (18), qui est muni d'un côté d'un joint à lèvres (42,43) élastique axial,
- avec au moins un chariot mobile axialement le long de profilés de guidage, ledit chariot présentant une tuyère d'aspiration guidée de manière étanche dans le joint à lèvres et un moteur d'entraînement doté d'un arbre de sortie et d'un galet de friction (96) plaqué contre le profilé de guidage (4) et déplaçant le chariot (16), et
- avec un ventilateur extracteur (20), qui est raccordé au canal d'aspiration à fente (18) et produit une dépression dans la buse d'aspiration (55) ainsi que dans un tuyau flexible (15) qui y est raccordé, caractérisé en ce que le chariot (16) est guidé et maintenu sur les profilés de guidage (40,41) au moyen de galets (48-51), en ce que l'arbre de sortie (95) supporte directement le galet de friction (96) et en ce qu'un élément d'accouplement à commande électrique est prévu pour l'embrayage ou le débrayage de la transmission de force entre le moteur d'entraînement (94) et le profilé de guidage (41).

2. Dispositif selon la revendication 1, caractérisé en ce que le chariot (16) présente un cadre composé d'arceaux (45,46) avec des sections (44), qui se trouvent dans un plan parallèle à l'axe longitudinal du canal d'aspiration à fente (18), que les sections (44) des deux arceaux (45,46) sont munies d'une plaque de montage (60,60a) détachable, que le moteur d'entraînement (94) est disposé sur la première plaque de montage (60) et qu'un élévateur (30) de tuyau flexible est disposé sur la seconde plaque de montage (61,61a) détachable.

3. Dispositif selon l'une des revendications 1 et 2, caractérisé en ce que la position du moteur d'entraînement (94) peut être modifiée par rapport au profilé de guidage (41) au moyen d'un électro-aimant (100), le moteur d'entraînement étant de préférence situé prés d'un levier (91,92,93) basculable à l'aide d'une articulation, sur l'un des bras de laquelle est en prise l'électro-aimant (100).

4. Dispositif selon la revendication 2 ou 3, caractérisé en ce que la première plaque de montage (60) est paralléle à l'axe longitudinal du canal d'aspiration à fente et présente un flanc (89) orientant le profilé de guidage (41) situé au voisinage immédiat du canal d'aspiration à fente (18), flanc dont l'extrémité libre est munie d'une charnière (90), qui porte en outre, pour orienter le canal d'aspiration (18), une plaque-levier (91), à l'extrémité libre (92) de laquelle est en prise la tige de commande (101) de l'électro-aimant (100), également fixée à la plaque de montage (60), et que le moteur d'entraînement (94) est maintenu par un autre flanc de montage (93) disposé sur la plaque-levier (91), la plaque-levier (91) étant de préférence soulevée lors de la fermeture du flux d'énergie.

5. Dispositif selon l'une des revendications précédentes, caractérisé en ce qu'un appareil de commutation (108) est couplé avec un détecteur de proximité (104 à 107), qui agit dans la direction de la trajectoire du chariot (16) et commande au moins l'élément de couplage à l'approche d'un obstacle.

6. Dispositif selon l'une des revendications précédentes, caractérisé en ce que l'appareil de commutation (108) est couplé avec un palpeur de dilatation (125), qui est fixé au tuyau flexible (15), de sorte que lors du dépassement d'une dilatation prédéterminée du tuyau flexible (15), le flux d'énergie est fermé.

7. Dispositif selon l'une des revendications précédentes, caractérisé en ce que, pour le moteur d'entraînement (94), l'élément de couplage et éventuellement l'élévateur de tuyau flexible (30) sont prévus, pour chacun, des balais de contact séparés (81 à 83, 114,115) et des rails conducteurs séparés (130,132 à 136).

8. Dispositif selon la revendication 7, caractérisé en ce que l'élévateur (30) du tuyau flexible contient, comme moyen d'entraînement, un moteur à courant continu (121) et que les rails conducteurs (130,132,136) disposés par paire comprennent des premières sections (130-,132), sur lesquelles il présente pour l'enroulement du tuyau flexible (15) une première polarité de la tension d'exploitation, tandis que de secondes sections (136) sont branchées, pour le déroulement, avec une seconde polarité, une première pince de jonction (157) du moteur (121) étant de préférence reliée de manière fixe aux balais conducteurs (82,83) de l'un des rails de la paire de rails conducteurs (130,132,136), une seconde pince de jonction (158) étant en liaison avec deux longueurs de commutation (147,148,149 ; 150,151,152) qui sont commandées par une paire de commutateurs terminaux (153,154,-155) commandables sur les deux côtés du moteur (121), les longueurs de commutation (147,148,149 : 150 ,151,-152) pouvant être reliées aux balais conducteurs (144,-145, 146) de l'autre rail par l'intermédiaire d'un inverseur (144,145,146), qui est commandé selon la polarité présente sur l'un des rails.

9. Dispositif selon la revendication 8, caractérisé en ce que l'inverseur (144,145,146) est commandé par l'intermédiaire d'une diode, qui est reliée à l'un des rails.

10. Dispositif selon l'une des revendications 7 à 9, caractérisé en ce que le chariot (16) est muni, dans la direction de la trajectoire, de deux balais conducteurs situés l'un derrière l'autre (81,83,114,-115), qui sont de préférence reliés ensemble par l'une de leurs extrémités par l'intermédiaire d'un ressort (86), sont basculants par l'extrémité opposée latéralement par rapport à la direction de la trajectoire et peuvent basculer vers le haut.

11. Dispositif selon l'une des revendications 2 à 13, caractérisé en ce que la première plaque de montage (60,60a), avec le moteur d'entraînement (94), l'élément de couplage ainsi que les balais conducteurs (81 à 83) et les rails conducteurs (133,133a, 134,135) qui lui appartiennent, sont disposés sur l'un des côtés du chariot et la seconde plaque de montage (61,61a) avec l'élévateur (30) du tuyau flexible ainsi que les balais conducteurs (114,115) et les rails conducteurs (130,132-136) qui lui appartiennent sont disposés sur l'autre côté du chariot (16), les plaques de montage (60a, 61a) étant de préférence vissées latéralement de l'extérieur sur le chariot (16).

12. Dispositif selon l'une des revendications 7 à 11, caractérisé en ce que le canal d'aspiration à fente (18) est voisin d'une trajectoire de retour (27), dont les extrémités sont reliées ensemble chacune par l'intermédiaire d'inverseurs (28,131), ou d'arcs de guidage profilés, au moins la trajectoire de retour (27) étant munie de rails conducteurs (134) pour le moteur d'entraînement (94) et l'élément de couplage, et en outre au moins les inverseurs (28,131) ou des arcs étant munis de rails conducteurs (132,133,133a, 135,136) pour l'élévateur (30) du tuyau flexible et éventuellement le moteur d'entraînement (94) ainsi que l'élément de couplage.
